# EUROPÄISCHE PATENTSCHRIFT

(11) **EP 1 348 896 B1**
(45) Veröffentlichungstag und Bekanntmachung des Hinweises auf die Patenterteilung: **11.03.2009**
(21) Anmeldenummer: 03005437.3
(22) Anmeldetag: 14.03.2003
(51) Int. Cl.: F16J 15/08

(54) **Zylinderkopfdichtung**
Cylinder head gasket
Joint de culasse

(30) Priorität: 28.03.2002 DE 10213900
(43) Veröffentlichungstag der Anmeldung: 01.10.2003
(73) Patentinhaber: ElringKlinger AG, 72581 Dettingen (DE)
(72) Erfinder: Werz, Ulrich, 72581 Dettingen (DE); Schmucker, Frank, 89584 Ehingen (DE)
(74) Vertreter: Hoeger, Stellrecht & Partner Patentanwälte

(56) Entgegenhaltungen:
- DE-A- 19 512 650
- DE-C1- 19 513 361
- US-B1- 6 283 480

## Beschreibung

Die vorliegende Erfindung betrifft eine Zylinderkopfdichtung, welche mindestens eine gesickte Dichtungsplatte, die mindestens eine Brennraum-Durchgangsöffnung und eine die Brennraum-Durchgangsöffnung umschließende höhenverformbare Sicke umfaßt, und mindestens eine der Sicke benachbarte Verformungsbegrenzungseinrichtung umfaßt.

Eine solche Zylinderkopfdichtung ist beispielsweise aus der DE 195 13 361 C1 bekannt.

Die aus der DE 195 13 361 C1 bekannte Zylinderkopfdichtung entspricht einer Zylinderkopfdichtung gemäß dem Oberbegriff von Anspruch 1 und weist für jede Brennraumsicke jeweils eine unmittelbar an der Brennraum-Durchgangsöffnung vorgesehene innere Verformungsbegrenzungseinrichtung, die durch Umbördeln des Randes der Brennraum-Durchgangsöffnung gebildet ist, sowie eine radial außerhalb der die Brennraum-Durchgangsöffnung umschließenden Sicke angeordnete äußere Verformungsbegrenzungseinrichtung auf, die durch zusätzliche, auf ein Trägerblech aufgeschweißte Verformungsbegrenzungsringe gebildet ist.

Durch diese - auch Stopper genannten - Verformungsbegrenzungseinrichtungen werden die die Brennraum-Durchgangsöffnungen der Zylinderkopfdichtung umschließenden höhenverformbaren Sicken gegen eine unzulässig starke Verformung geschützt. Zugleich stellen die Verformungsbegrenzungseinrichtungen partielle Verdickungen der Zylinderkopfdichtung dar, wodurch die an die Zylinderkopfdichtung angrenzenden Motorbauteile so vorgespannt werden, daß die dynamische Dichtspaltschwingung reduziert wird.

Bei den bekannten Zylinderkopfdichtungen ist von Nachteil, dass deren Verformungsbegrenzungseinrichtungen entweder nur unmittelbar an der Brennraum-Durchgangsöffnung einer Verformungsbegrenzungsplatte angeordnet werden können (Falzbördel an der Brennraum-Durchgangsöffnung) oder aber einen erhöhten Materialverbrauch und einen zusätzlichen Herstellungsschritt zum Verbinden der Verformungsbegrenzungseinrichtung mit einem Trägerblech bedingen (zusätzlicher Verformungsbegrenzungsring).

Der vorliegenden Erfindung liegt daher die Aufgabe zugrunde, eine Zylinderkopfdichtung der eingangs genannten Art zu schaffen, welche einfach und unter geringem Materialeinsatz herstellbar und hinsichtlich der Anordnung und Ausgestaltung der Verformungsbegrenzungseinrichtung flexibel ist.

Diese Aufgabe wird durch eine Zylinderkopfdichtung nach Anspruch 1 gelöst.

Bei der erfindungsgemäßen Lösung wird also das Material für den Verstärkungsbereich des Verformungsbegrenzungselements aus der Verformungsbegrenzungsplatte selbst entnommen, so dass kein zusätzliches Material neben der Verformungsbegrenzungsplatte verwendet werden muß, was den Materialverbrauch für die erfindungsgemäße Zylinderkopfdichtung verringert.

Ferner bleibt der aus der Ebene der Verformungsbegrenzungsplatte herausgebogene Verstärkungsbereich des Verformungsbegrenzungselements längs der Biegelinie, längs welcher er aus der Ebene der Verformungsbegrenzungsplatte herausgebogen ist, mit der Verformungsbegrenzungsplatte verbunden, so daß es nicht erforderlich ist, den Verstärkungsbereich durch einen zusätzlichen Herstellungsschritt, beispielsweise einen Schweißvorgang, mit der Verformungsbegrenzungsplatte zu verbinden. Hierdurch wird der zeitliche und apparative Aufwand bei der Herstellung der Zylinderkopfdichtung sowie der hierfür erforderliche Energieaufwand reduziert.

Das Heraustrennen eines Bereichs der Verformungsbegrenzungsplatte längs einer Trennlinie und das anschließende Herausbiegen dieses Bereichs aus der Ebene der Verformungsbegrenzungsplatte längs einer Biegelinie ist an jeder beliebigen Stelle der Verformungsbegrenzungsplatte möglich, so daß die Verformungsbegrenzungselemente der Verformungsbegrenzungseinrichtung an jeder beliebigen Stelle der Verformungsbegrenzungsplatte angeordnet werden können und somit die Verformungsbegrenzungseinrichtung sehr flexibel gestaltbar ist.

Bei einer bevorzugten Ausgestaltung der erfindungsgemäßen Zylinderkopfdichtung ist vorgesehen, daß der Verstärkungsbereich des mindestens einen Verformungsbegrenzungselements im wesentlichen parallel zu der Ebene der Verformungsbegrenzungsplatte ausgerichtet ist.

Vorzugsweise ist vorgesehen, daß der Verstärkungsbereich des mindestens einen Verformungsbegrenzungselements an einer der Hauptflächen der Verformungsbegrenzungsplatte, vorzugsweise flächig, anliegt. Ein solcher Verstärkungsbereich kann in einfacher Weise durch Umlegen des aus der Ebene der Verformungsbegrenzungsplatte herausgebogenen Bereichs auf die Ober- oder Unterseite der Verformungsbegrenzungsplatte hergestellt werden.

Um ein Abscheren des auf die Verformungsbegrenzungsplatte umgelegten Verstärkungsbereichs zu vermeiden, kann vorgesehen sein, daß der Verstärkungsbereich, beispielsweise durch Verschweißen oder Verkleben, mit dem anliegenden Bereich der Verformungsbegrenzungsplatte verbunden ist.

Der Verstärkungsbereich des mindestens einen Verformungsbegrenzungselements kann zu der Zylinderkopfseite der Verformungsbegrenzungsplatte hin aus der Ebene der Verformungsbegrenzungsplatte herausgebogen sein.

Alternativ hierzu ist auch möglich, daß der Verstärkungsbereich des mindestens einen Verformungsbegrenzungselements zu der Motorblockseite der Verformungsbegrenzungsplatte aus der Ebene der Verformungsbegrenzungsplatte herausgebogen ist.

Weist die Verformungsbegrenzungsplatte mehrere Verstärkungsbereiche auf, welche einem einzigen Verformungsbegrenzungselement oder mehreren Verformungsbegrenzungselementen zugeordnet sein können, so kann auch vorgesehen sein, daß mindestens ein Verstärkungsbereich eines Verformungsbegrenzungselements zu der Zylinderkopfseite und mindestens ein weiterer Verstärkungsbereich zu der Motorblockseite der Verformungsbegrenzungsplatte hin aus der Ebene der Verformungsbegrenzungsplatte herausgebogen ist.

Die Verformungsbegrenzungsplatte der erfindungsgemäßen Zylinderkopfdichtung kann mit der gesickten Dichtungsplatte identisch sein. In diesem Fall sind die Verformungsbegrenzungselemente der Verformungsbegrenzungseinrichtung an derselben Platte der Dichtung angeordnet wie die durch die Verformungsbegrenzungseinrichtung geschützte Sicke.

Bei einer bevorzugten Ausgestaltung der Erfindung ist jedoch vorgesehen, daß die Verformungsbegrenzungsplatte eine von der gesickten Dichtungsplatte verschiedene Dichtungsplatte der Zylinderkopfdichtung ist. Hierdurch ist es insbesondere möglich, die Dichtungsplatte und die Verformungsbegrenzungsplatte aus verschiedenen Materialien und mit verschiedener Materialstärke herzustellen, so daß das gewählte Material und die gewählte Materialstärke für den jeweiligen Einsatzzweck optimiert werden können.

Insbesondere ist es somit möglich, für die Verformungsbegrenzungsplatte ein metallisches Material zu verwenden, welches eine geringere Zugfestigkeit aufweist als ein für die gesickte Dichtungsplatte verwendetes metallisches Material.

Ferner kann vorgesehen sein, daß zwischen der Verformungsbegrenzungsplatte und der gesickten Dichtungsplatte eine weitere Dichtungsplatte der Zylinderkopfdichtung angeordnet ist. Diese weitere Dichtungsplatte kann insbesondere als Distanzplatte dienen, um die Gesamtdicke der Zylinderkopfdichtung auf einen gewünschten Wert einzustellen.

Eine Distanzplatte der Zylinderkopfdichtung kann aber auch eine äußere Platte der Dichtung bilden, die motorblockseitig oder zylinderkopfseitig angeordnet sein kann.

Dabei kann vorgesehen sein, daß der Verstärkungsbereich des mindestens einen Verformungsbegrenzungselements zu der der weiteren Dichtungsplatte der Zylinderkopfdichtung abgewandten Seite der Verformungsbegrenzungsplatte hin aus der Ebene der Verformungsbegrenzungsplatte herausgebogen ist.

Vorzugsweise ist jedoch vorgesehen, daß der Verstärkungsbereich des mindestens einen Verformungsbegrenzungselements zu der der weiteren Dichtungsplatte der Zylinderkopfdichtung zugewandten Seite der Verformungsbegrenzungsplatte hin aus der Ebene der Verformungsbegrenzungsplatte herausgebogen ist. Dadurch kommt der aus der Verformungsbegrenzungsplatte herausgetrennte freie Rand des Verstärkungsbereichs im montierten Zustand der Zylinderkopfdichtung an der weiteren Dichtungsplatte, die insbesondere als Distanzplatte ausgebildet sein kann, und nicht an der gesickten Dichtungsplatte oder an den an die Zylinderkopfdichtung angrenzenden Motorbauteilen zu liegen, so daß eine Beschädigung der gesickten Dichtungsplatte und der an die Zylinderkopfdichtung angrenzenden Motorbauteile im Betrieb der Zylinderkopfdichtung ausgeschlossen ist.

Das mindestens eine Verformungsbegrenzungselement kann auf der der Brennraum-Durchgangsöffnung abgewandten Seite der Sicke oder auf der der Brennraum-Durchgangsöffnung zugewandten Seite der Sicke angeordnet sein.

Vorzugsweise ist das mindestens eine Verformungsbegrenzungselement auf der der Brennraum-Durchgangsöffnung abgewandten Seite der Sicke angeordnet.

Um die die Brennraum-Durchgangsöffnung umschließende Sicke längs ihrer gesamten Länge gegen eine unzulässige Verformung schützen zu können, ist es von Vorteil, wenn die Verformungsbegrenzungseinrichtung eine Mehrzahl von Verformungsbegrenzungselementen umfaßt, die längs der Umfangsrichtung der Brennraum-Durchgangsöffnung aufeinanderfolgen.

Dabei können jeweils zwei längs der Umfangsrichtung der Brennraum-Durchgangsöffnung aufeinanderfolgende Verformungsbegrenzungselemente durch einen dazwischen angeordneten Steg der Verformungsbegrenzungsplatte voneinander getrennt sein.

Um Abscherbewegungen in dem zwischen zwei aufeinanderfolgenden Verformungsbegrenzungselementen liegenden Stegbereich zu vermindern, ist es günstig, den radial außerhalb der durch die Verformungsbegrenzungselemente gebildeten Verformungsbegrenzungseinrichtung liegenden Bereich der Verformungsbegrenzungsplatte von dem radial innerhalb der Verformungsbegrenzungseinrichtung liegenden Bereich der Verformungsbegrenzungsplatte mechanisch zu entkoppeln.

Diese Entkopplung kann beispielsweise dadurch bewirkt werden, daß die Verformungsbegrenzungsplatte im Bereich zwischen zwei längs der Umfangsrichtung der Brennraum-Durchgangsöffnung aufeinanderfolgenden Verformungsbegrenzungselementen, vorzugsweise durch Verschweißung, mit einer anderen Dichtungsplatte der Zylinderkopfdichtung, beispielsweise mit der gesickten Dichtungsplatte, verbunden ist.

Alternativ oder ergänzend hierzu ist es zur Entkopplung der radial außerhalb und der radial innerhalb der Verformungsbegrenzungseinrichtung liegenden Bereiche der Verformungsbegrenzungsplatte möglich, die Verformungsbegrenzungsplatte im Bereich zwischen zwei längs der Umfangsrichtung der Brennraum-Durchgangsöffnung aufeinanderfolgenden Verformungsbegrenzungselementen mit einer Prägung, vorzugsweise mit einer Sicke, zu versehen.

Die durch das mindestens eine Verformungsbegrenzungselement gebildete Verformungsbegrenzungseinrichtung der Zylinderkopfdichtung kann eine äußere Verformungsbegrenzungseinrichtung sein, welche radial außerhalb der zu schützenden Sicke angeordnet ist, oder eine innere Verformungsbegrenzungseinrichtung, welche radial innerhalb der zu schützenden Sicke angeordnet ist.

Bei einer bevorzugten Ausgestaltung der Erfindung ist vorgesehen, daß die Zylinderkopfdichtung sowohl eine äußere Verformungsbegrenzungseinrichtung als auch eine innere Verformungsbegrenzungseinrichtung umfaßt.

Dabei können die äußere Verformungsbegrenzungseinrichtung und die innere Verformungsbegrenzungseinrichtung an verschiedenen Platten der Zylinderkopfdichtung angeordnet sein.

Vorzugsweise ist jedoch vorgesehen, daß die äußere Verformungsbegrenzungseinrichtung und die innere Verformungsbegrenzungseinrichtung beide an derselben Verformungsbegrenzungsplatte angeordnet sind.

Die Verformungsbegrenzungselemente der äußeren Verformungsbegrenzungseinrichtung und der inneren Verformungsbegrenzungseinrichtung können zu derselben Seite der Verformungsbegrenzungsplatte hin über die jeweils angrenzenden Bereiche der Verformungsbegrenzungsplatte überstehen.

Alternativ hierzu ist es auch möglich, daß die Verformungsbegrenzungselemente der äußeren Verformungsbegrenzungseinrichtung und der inneren Verformungsbegrenzungseinrichtung zu verschiedenen Seiten der Verformungsbegrenzungsplatte hin über die jeweils angrenzenden Bereiche der Verformungsbegrenzungsplatte überstehen.

Bei einer bevorzugten Ausgestaltung der Erfindung ist vorgesehen, daß die innere Verformungsbegrenzungseinrichtung ein Verformungselement umfaßt, das einen an die Brennraum-Durchgangsöffnung der Verformungsbegrenzungsplatte angrenzenden, durch Herausbiegen des Randbereiches der Brennraum-Durchgangsöffnung aus der Ebene der Verformungsbegrenzungsplatte gebildeten Verstärkungsbereich aufweist. Ein solcher als Falzbördel ausgebildeter Verstärkungsbereich ist in besonders einfacher Weise herstellbar.

Die Verstärkungsbereiche der Verformungsbegrenzungselemente können radial nach innen, d.h. zu der Brennraum-Durchgangsöffnung der Verformungsbegrenzungsplatte hin, oder radial nach außen, d.h. von der Brennraum-Durchgangsöffnung der Verformungsbegrenzungsplatte weg, aus der Ebene der Verformungsbegrenzungsplatte herausgebogen sein.

Ist der Verstärkungsbereich des Verformungsbegrenzungselements längs einer gekrümmten Biegelinie radial nach innen herausgebogen, so ist vorzugsweise an dem Rand des Verstärkungsbereichs, welcher vor dem Herausbiegen der Brennraum-Durchgangsöffnung abgewandt ist, (beispielsweise durch Ausstanzen) mindestens eine Ausnehmung gebildet, um eine Faltenbildung beim Herausbiegen und gegebenenfalls Umlegen des Verstärkungsbereichs zu reduzieren oder ganz zu vermeiden.

Ferner kann vorgesehen sein, daß der Verstärkungsbereich mit mindestens einer Prägung versehen ist, deren Prägetiefe von dem vor dem Herausbiegen der Brennraum-Durchgangsöffnung abgewandten Rand des Verstärkungsbereichs zu der Biegelinie hin abnimmt.

Bei einer besonderen Ausgestaltung der Erfindung ist vorgesehen, daß die Verformungsbegrenzungseinrichtung eine Mehrzahl von Verformungsbegrenzungselementen umfaßt, die längs der Umfangsrichtung der Brennraum-Durchgangsöffnung aufeinanderfolgen, wobei die Verstärkungsbereiche der Verformungsbegrenzungselemente abwechselnd zu der Brennraum-Durchgangsöffnung hin (radial nach innen) und von der Brennraum-Durchgangsöffnung weg (radial nach außen) aus der Ebene der Verformungsbegrenzungsplatte herausgebogen sind.

Die erfindungsgemäßen Verformungsbegrenzungselemente können jeweils einen oder mehrere Verstärkungsbereiche umfassen.

Insbesondere kann vorgesehen sein, daß mindestens ein Verformungsbegrenzungselement mehrere Verstärkungsbereiche aufweist, welche zu verschiedenen Richtungen hin aus der Ebene der Verformungsbegrenzungsplatte herausgebogen sind.

Um ein Einreißen der Verformungsbegrenzungsplatte an den Endpunkten der Trennlinie eines Verstärkungsbereichs zu vermeiden, ist es von Vorteil, wenn sich die Trennlinie mindestens eines Verstärkungsbereichs in einen nicht aus der Ebene der Verformungsbegrenzungsplatte herausgebogenen Bereich der Verformungsbegrenzungsplatte fortsetzt.

Ferner kann ein Einreißen der Verformungsbegrenzungsplatte auch dadurch vermieden werden, daß die Trennlinie eines Verstärkungsbereichs ringförmig geschlossen und der von der Trennlinie umschlossene Bereich der Verformungsbegrenzungsplatte von der Verformungsbegrenzungsplatte abgetrennt worden ist. Eine solche ringförmig geschlossene Trennlinie weist keine Endpunkte auf, an denen die Verformungsbegrenzungsplatte einreißen könnte.

Durch das Herausbiegen des Verstärkungsbereichs aus der Ebene der Verformungsbegrenzungsplatte entsteht in der Verformungsbegrenzungsplatte eine Durchgangsöffnung.

Bei besonderen Ausgestaltungen der erfindungsgemäßen Zylinderkopfdichtung kann vorgesehen sein, daß die durch das Herausbiegen des Verstärkungsbereichs des mindestens einen Verformungsbegrenzungselements aus der Ebene der Verformungsbegrenzungsplatte entstandene Durchgangsöffnung einen Teil einer größeren Durchgangsöffnung in der Verformungsbegrenzungsplatte bildet.

Diese Durchgangsöffnung kann beispielsweise eine Befestigungsmittel-Durchgangsöffnung oder eine Fluid-Durchgangsöffnung für den Durchtritt eines Kühlmittels oder eines Schmiermittels durch die Zylinderkopfdichtung sein.

Die dem Verformungsbegrenzungselement benachbarte Durchgangsöffnung kann aber auch nur für den Zweck der Bildung des Verformungsbegrenzungselements vorgesehen sein und keine weitere Funktion haben.

Neben der Verformungsbegrenzungseinrichtung für die die Brennraum-Durchgangsöffnung der Zylinderkopfdichtung umschließende Sicke können an der erfindungsgemäßen Zylinderkopfdichtung noch weitere Verformungsbegrenzungseinrichtungen vorgesehen sein.

So ist bei einer bevorzugten Ausgestaltung der Zylinderkopfdichtung vorgesehen, daß die Zylinderkopfdichtung neben der Brennraum-Durchgangsöffnung bzw. neben den Brennraum-Durchgangsöffnungen mindestens eine weitere Durchgangsöffnung umfaßt, daß mindestens eine Dichtungsplatte der Zylinderkopfdichtung mit einer die weitere Durchgangsöffnung umschließenden zusätzlichen Sicke versehen ist und daß die Zylinderkopfdichtung eine zusätzliche Verformungsbegrenzungseinrichtung für die zusätzliche Sicke umfaßt.

Vorzugsweise wird die zusätzliche Verformungsbegrenzungseinrichtung ebenfalls an der Verformungsbegrenzungsplatte angeordnet.

Ferner ist es günstig, wenn die zusätzliche Verformungsbegrenzungseinrichtung mindestens ein Verformungsbegrenzungselement umfaßt, das in der erfindungsgemäßen Weise gebildet ist, d.h. mindestens einen Verstärkungsbereich aufweist, welcher durch Herausbiegen eines Bereiches der Verformungsbegrenzungsplatte aus der Ebene der Verformungsbegrenzungsplatte heraus gebildet ist.

Die durch die zusätzliche Verformungsbegrenzungseinrichtung geschützte zusätzliche Sicke kann insbesondere eine Befestigungsmittel-Durchgangsöffnung als zusätzliche Durchgangsöffnung umschließen.

Neben der Verformungsbegrenzungseinrichtung zum Schutz der Brennraumsicke und gegebenenfalls zusätzlichen Verformungsbegrenzungseinrichtungen für zusätzliche Sicken kann die Zylinderkopfdichtung ferner eine Randverformungsbegrenzungseinrichtung zum Schutz einer Randsicke umfassen, mit welcher mindestens eine Dichtungsplatte der Zylinderkopfdichtung längs ihres äußeren Randes versehen ist.

Auch diese Randverformungsbegrenzungseinrichtung ist vorzugsweise an der Verformungsbegrenzungsplatte angeordnet.

Besonders günstig ist es, wenn auch die Randverformungsbegrenzungseinrichtung mindestens ein Verformungsbegrenzungselement umfaßt, das in der erfindungsgemäßen Weise ausgebildet ist, d.h. mindestens einen Verstärkungsbereich aufweist, welcher durch Herausbiegen eines Randbereiches der Verformungsbegrenzungsplatte aus der Ebene der Verformungsbegrenzungsplatte gebildet ist.

Weitere Merkmale und Vorteile der Erfindung sind Gegenstand der nachfolgenden Beschreibung und der zeichnerischen Darstellung von Ausführungsbeispielen:

In den Zeichnungen zeigen:
- Fig. 1: eine ausschnittsweise Draufsicht auf eine gesickte Decklage einer Zylinderkopfdichtung;
- Fig.2: eine ausschnittsweise Draufsicht auf eine Verformungsbegrenzungsplatte der Zylinderkopfdichtung;
- Fig. 3: einen schematischen Schnitt durch die Zylinderkopfdichtung aus den Fig. 1 und 2 sowie durch einen angrenzenden Zylinderkopf und einen angrenzenden Motorblock längs der Linien A-A in den Fig. 1 und 2;
- Fig. 4: eine vergrößerte Darstellung des Bereichs I aus Fig. 2;
- Fig. 5: einen schematischen Schnitt durch die Zylinderkopfdichtung längs der Linien B-B in den Fig. 1 und 2;
- Fig. 6: ein schematischer Schnitt durch die Zylinderkopfdichtung längs der Linien C-C in den Fig. 1 und 2;
- Fig. 7: einen schematischen Schnitt durch die Zylinderkopfdichtung längs der Linien D-D in den Fig. 1 und 2;
- Fig. 8: eine schematische perspektivische Darstellung einer inneren und einer äußeren Verformungsbegrenzungseinrichtung;
- Fig. 9: einen schematischen Schnitt durch eine zweite Ausführungsform einer Zylinderkopfdichtung längs der Linien A-A in den Fig. 1 und 2;
- Fig. 10: einen schematischen Schnitt durch die zweite Ausführungsform einer Zylinderkopfdichtung längs der Linien B-B in den Fig. 1 und 2;
- Fig. 11: einen schematischen Schnitt durch die zweite Ausführungsform einer Zylinderkopfdichtung längs der Linien C-C in den Fig. 1 und 2;
- Fig. 12: einen schematischen Schnitt durch die zweite Ausführungsform einer Zylinderkopfdichtung längs der Linien D-D in den Fig. 1 und 2;
- Fig. 13: einen schematischen Schnitt durch eine dritte Ausführungsform einer Zylinderkopfdichtung längs der Linien A-A in den Fig. 1 und 2;
- Fig. 14: einen schematischen Schnitt durch eine vierte Ausführungsform einer Zylinderkopfdichtung längs der Linien A-A in den Fig. 1 und 2;
- Fig. 15: eine ausschnittsweise Draufsicht auf eine Verformungsbegrenzungsplatte einer vierten Ausführungsform der Zylinderkopfdichtung;
- Fig. 16: einen schematischen Schnitt durch eine fünfte Ausführungsform einer Zylinderkopfdichtung längs der Linie A'-A' in Fig. 15;
- Fig. 17: einen schematischen Schnitt durch eine sechste Ausführungsform einer Zylinderkopfdichtung längs der Linie A'-A' in Fig. 15;
- Fig. 18: einen schematischen Schnitt durch eine siebte Ausführungsform einer Zylinderkopfdichtung längs der Linie A'-A' in Fig. 15;
- Fig. 19: einen schematischen Schnitt durch eine achte Ausführungsform einer Zylinderkopfdichtung längs der Linie A'-A' in Fig. 15; und
- Fig. 20: einen schematischen Schnitt durch eine neunte Ausführungsform einer Zylinderkopfdichtung mit einer zusätzlichen Trägerplatte sowie durch einen angrenzenden Zylinderkopf und einen angrenzenden Motorblock längs der Linien A-A in den Fig. 1 und 2.

Gleiche oder funktional äquivalente Elemente sind in allen Figuren mit denselben Bezugszeichen bezeichnet.

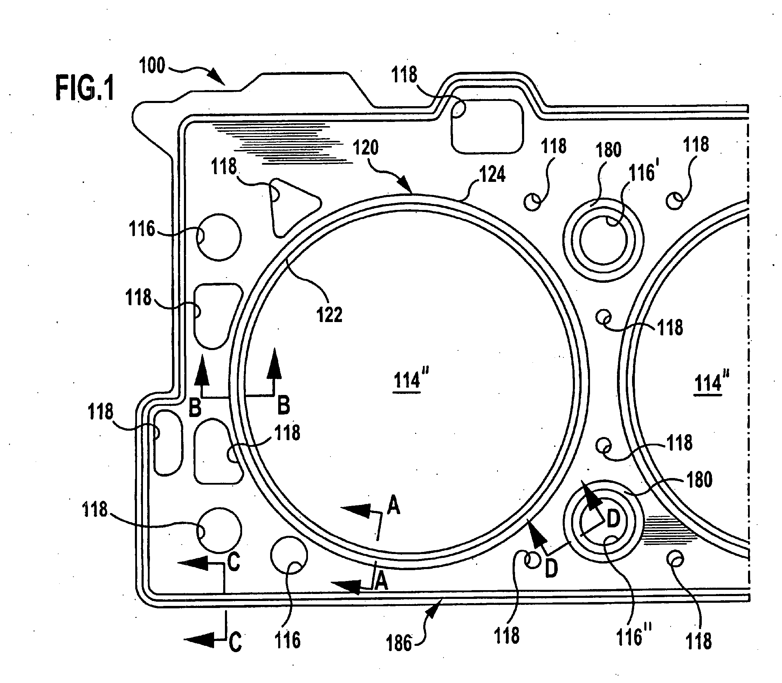

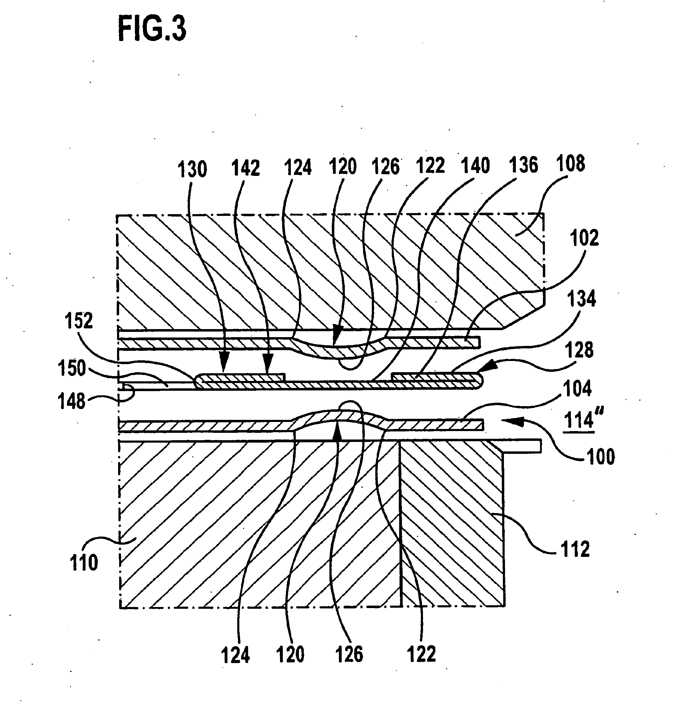

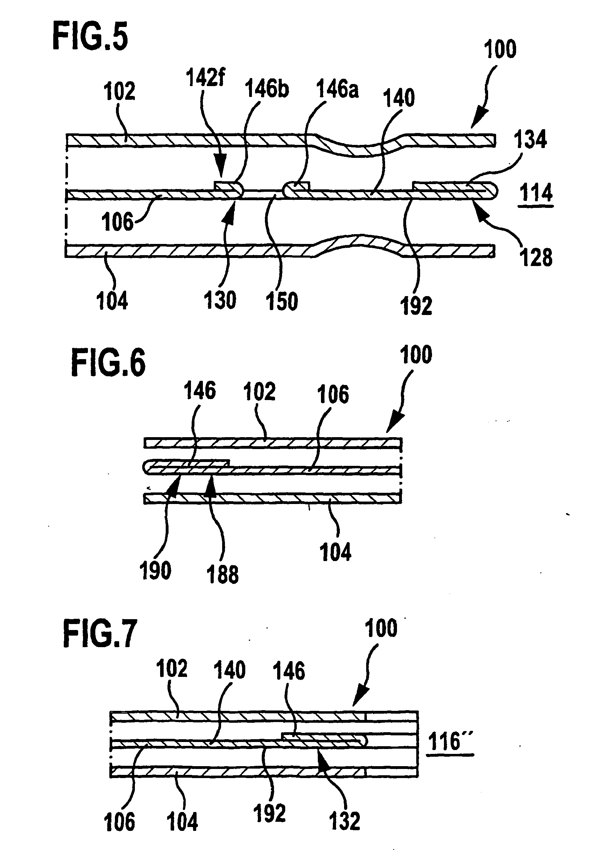

Ein in den Fig. 1 bis 8 dargestellte, als Ganzes mit 100 bezeichnete Zylinderkopfdichtung umfaßt (siehe Fig. 3) eine im wesentlichen ebene obere Deckplatte 102, eine im wesentlichen ebene untere Deckplatte 104 und eine zwischen der oberen Deckplatte 102 und der unteren Deckplatte 104 angeordnete, im wesentliche ebene Verformungsbegrenzungsplatte 106.

Die obere Deckplatte 102 und die untere Deckplatte 104 sind aus einem federelastischen Material, beispielsweise aus einem Federstahlblech, gebildet.

Die Verformungsbegrenzungsplatte 106 ist aus einem metallischen Material gebildet, welches vorzugsweise leichter umformbar ist als das Material der Deckplatten 102 und 104. Vorzugsweise weist das Material der Verformungsbegrenzungsplatte 106 eine Zugfestigkeit von weniger als 1.000 N/mm² auf.

Wie in Fig. 3 dargestellt, ist die Zylinderkopfdichtung 100 zur Anordnung zwischen einem Zylinderkopf 108 einerseits und einem Motorblock 110 mit darin aufgenommenen Zylinderlaufbuchsen 112 andererseits vorgesehen.

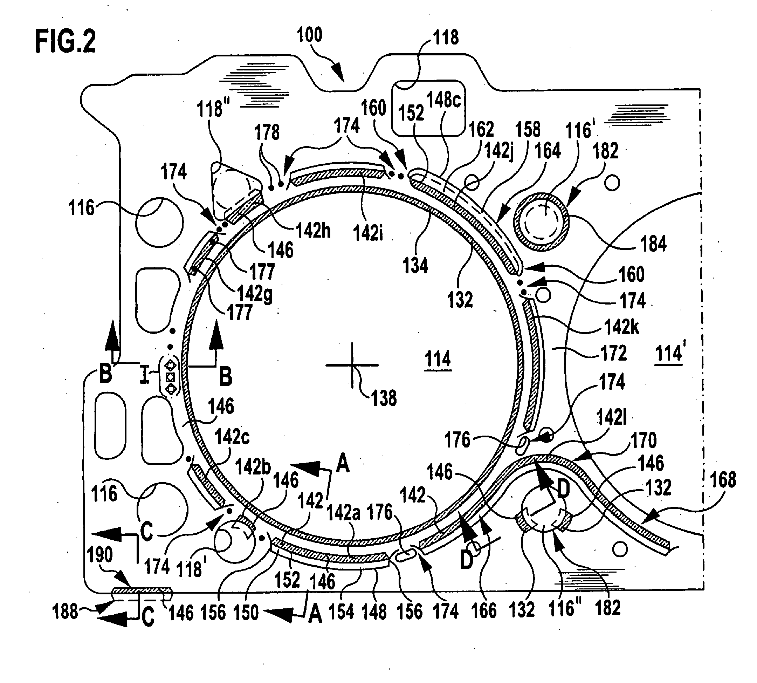

Jede der Platten der Zylinderkopfdichtung 100 ist mit den Brennkammern des Motorblocks 110 zugeordneten, kreisförmigen Brennraum-Durchgangsöffnungen 114 bzw. 114" versehen (siehe Fig. 1 und 2).

Ferner sind alle Platten der Zylinderkopfdichtung 100 mit Befestigungsmittel-Durchgangsöffnungen 116 für den Durchtritt von Befestigungsmitteln, beispielsweise Zylinderkopfschrauben, durch die Zylinderkopfdichtung 100 und mit Fluid-Durchgangsöffnungen 118, die dem Durchtritt von Fluiden, beispielsweise von Kühlmitteln oder Schmiermitteln, durch die Zylinderkopfdichtung 100 dienen, versehen, wobei die in den verschiedenen Platten der Zylinderkopfdichtung 100 vorgesehenen Brennraum-Durchgangsöffnungen 114 und 114", Befestigungsmittel-Durchgangsöffnungen 116 und Fluid-Durchgangsöffnungen 118 im wesentlichen miteinander fluchten.

Um eine ausreichend gasdichte Abdichtung der Brennkammern zu gewährleistern, sind die obere Deckplatte 102 und die untere Deckplatte 104 jeweils mit Brennraumsicken 120 versehen, welche jeweils eine der Brennraum-Durchgangsöffnungen 114" umschließen.

Wie aus Fig. 3 zu ersehen ist, sind diese Sicken 120 als Vollsicken ausgebildet, welche zur Brennraum-Durchgangsöffnung 114" hin durch einen inneren Sickenrand 122 und auf der der Brennraum-Durchgangsöffnung abgewandten Seite durch einen äußeren Sickenrand 124 berandet sind und sich zwischen dem inneren und dem äußeren Sickenrand 122 bzw. 124 zu der Verformungsbegrenzungsplatte 106 hin vorwölben, wobei die Kuppe 126 des vorgewölbten Bereiches die Abdichtlinie der jeweiligen Sicke 120 definiert.

Um eine Beschädigung der Brennraumsicken 120 aufgrund der im Betrieb des Verbrennungsmotors auftretenden Dichtspaltvariationen zu vermeiden, umfasst die Zylinderkopfdichtung 100 eine innere Verformungsbegrenzungseinrichtung 128 und eine äußere Verformungsbegrenzungseinrichtung 130, welche in dem dargestellten Ausführungsbeispiel beide an der Verformungsbegrenzungsplatte 106 ausgebildet sind.

Die innere Verformungsbegrenzungseinrichtung 128 ist zwischen den Brennraumsicken 120 und der zugehörigen Brennraum-Durchgangsöffnung 114" angeordnet, während die äußere Verformungsbegrenzungseinrichtung 130 in dem der Brennraum-Durchgangsöffnung 114" abgewandten, außerhalb der Brennraumsicken 120 liegenden Bereich der Verformungsbegrenzungsplatte 106 angeordnet ist.

Die innere Verformungsbegrenzungseinrichtung 128 umfasst als Verformungsbegrenzungselement 132 einen sich ringförmig um die Brennraum-Durchgangsöffnung 114 herum erstreckenden Falzbördel 134, welcher dadurch gebildet ist, dass der die Brennraum-Durchgangsöffnung 114 berandende Randbereich 136 der Verformungsbegrenzungsplatte 106 aus der Ebene der Verformungsbegrenzungsplatte herausgebogen und - vom Mittelpunkt 138 der Brennraum-Durchgangsöffnung 114 aus gesehen - radial nach außen auf die Oberseite 140 der Verformungsbegrenzungsplatte umgelegt worden ist.

Die äußere Verformungsbegrenzungseinrichtung 130 umfasst eine Mehrzahl längs der Umfangsrichtung der Brennraum-Durchgangsöffnung 114 aufeinanderfolgender, in der Umfangsrichtung voneinander beabstandeter Verformungsbegrenzungselemente 142, zwischen denen jeweils ein Steg 174 in der Verformungsbegrenzungsplatte 106 angeordnet ist.

Das mit 142a bezeichnete Verformungsbegrenzungselement (siehe Fig. 2) der äußeren Verformungsbegrenzungseinrichtung 130 ist dadurch gebildet, dass ein Verstärkungsbereich 146, welcher sich längs der Umfangsrichtung der Brennraum-Durchgangsöffnung 114 erstreckt, längs einer Trennlinie 148 aus der Verformungsbegrenzungsplatte 106 herausgetrennt und anschließend aus der Ebene der Verformungsbegrenzungsplatte 106 nach oben herausgebogen und - vom Mittelpunkt 138 der Brennraum-Durchgangsöffnung 114 aus gesehen-radial nach innen auf die Oberseite 140 der Verformungsbegrenzungsplatte 106 umgelegt worden ist.

Aufgrund dieser Herstellungsweise des Verformungsbegrenzungselements 142a verbleibt neben dem Verstärkungsbereich 146 eine Durchgangsöffnung 150 in der Verformungsbegrenzungsplatte 106, welche an ihrer radial äußeren Seite und an ihren Enden von der Trennlinie 148 und an ihrer radial inneren Seite von der Biegelinie 152 begrenzt wird, längs welcher der Verstärkungsbereich aus der Ebene der Verformungsbegrenzungsplatte 106 herausgebogen worden ist.

Die Trennlinie 148 umfaßt einen mittleren Abschnitt 154, welcher sich längs der Umfangsrichtung der Brennraum-Durchgangsöffnung 114 erstreckt, und zwei Endabschnitte 156, welche sich quer zur Umfangsrichtung und quer zum Radius der Brennraum-Durchgangsöffnung 114 erstrecken, so daß sich die Durchgangsöffnung 150 zu der Brennraum-Durchgangsöffnung 114 hin erweitert.

Um zu verhindern, daß die Verformungsbegrenzungsplatte 106 im Betrieb der Zylinderkopfdichtung 100 an den Endbereichen der Durchgangsöffnungen 150 einreißt, setzen sich die Endabschnitte 156 der Trennlinie 148 in den nicht aus der Ebene der Verformungsbegrenzungsplatte 106 herausgebogenen Bereich der Verformungsbegrenzungsplatte 106 fort und enden, wie aus Fig. 2 zu ersehen ist, im Abstand von der Durchgangsöffnung 150 und von dem Verstärkungsbereich 146 des Verformungsbegrenzungselements 142a und in einem Abstand von der Brennraum-Durchgangsöffnung 114, welcher im wesentlichen dem Abstand des radial inneren Randes des Verstärkungsbereichs 146 von der Brennraum-Durchgangsöffnung 114 entspricht.

Der in den nicht herausgebogenen Bereich der Verformungsbegrenzungsplatte 106 fortgesetzte Teil der Endabschnitte 156 der Trennlinie 148 ist - vom Mittelpunkt 138 der Brennraum-Durchgangsöffnung 114 aus gesehen - konvex gekrümmt.

Das in der Umfangsrichtung der Brennraum-Durchgangsrichtung 114 (in der Ansicht der Fig. 2 im Uhrzeigersinn) auf das Verformungsbegrenzungselement 142a folgende Verformungsbegrenzungselement 142b weist einen Verstärkungsbereich 146 auf, welcher am Rande einer Fluid-Durchgangsöffnung 118' angeordnet ist.

Dieser Verstärkungsbereich 146 ist dadurch gebildet, daß beim Ausstanzen der Fluid-Durchgangsöffnung 118' ein in die Fluid-Durchgangsöffnung 118' überstehender Bereich der Verformungsbegrenzungsplatte 106 belassen und dieser Bereich anschließend längs des Randes der Fluid-Durchgangsöffnung 118' nach oben aus der Ebene der Verformungsbegrenzungsplatte 106 herausgebogen und - vom Mittelpunkt 138 der Brennraum-Durchgangsöffnung 114 aus gesehen - radial nach innen auf die Oberseite 140 der Verformungsbegrenzungsplatte 106 umgelegt worden ist.

Wie aus Fig. 2 zu ersehen ist, erstreckt sich der Verstärkungsbereich 146 des Verformungsbegrenzungselements 142b längs der Umfangsrichtung der Fluid-Durchgangsöffnung 118'.

Längs der Umfangsrichtung der Brennraum-Durchgangsöffnung 114 folgt auf das Verformungsbegrenzungselement 142b ein Versorgungsbegrenzungselement 142c, welches einen dem Verformungsbegrenzungselement 142a entsprechenden Aufbau aufweist, sich jedoch über einen kleineren Umfangswinkel erstreckt.

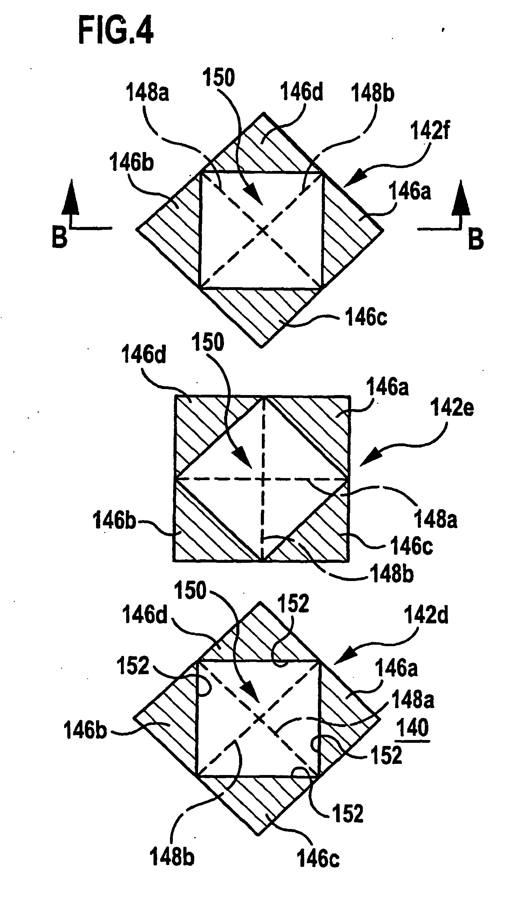

Auf das Verformungsbegrenzungselement 142c folgt, längs der Umfangsrichtung der Brennraum-Durchgangsöffnung 114, eine Gruppe von drei Verformungsbegrenzungselementen 142d, 142e und 142f, welche insbesondere in der vergrößerten Draufsicht der Fig. 4 dargestellt sind.

Das Verformungsbegrenzungselement 142d weist vier Verstärkungsbereiche 146a, 146b, 146c und 146d auf, welche dadurch gebildet sind, daß die Verformungsbegrenzungsplatte 106 längs zweier sich schneidender Trennlinien 148a, 148b, welche die Diagonalen eines Vierecks, insbesondere eines Quadrates, bilden, eingeschnitten worden ist und die auf diese Weise aus der Verformungsbegrenzungsplatte 106 herausgetrennten, dreieckigen Bereiche um die Endpunkte der Trennlinien 148a, 148b miteinander verbindende Biegelinien 152 nach oben aus der Ebene der Verformungsbegrenzungsplatte 106 herausgebogen und auf die Oberseite 140 der Verformungsbegrenzungsplatte 106 umgelegt worden sind.

Dabei sind der Verstärkungsbereich 146a - vom Mittelpunkt der Brennraum-Durchgangsöffnung 114 aus gesehen - radial nach innen, der Verstärkungsbereich 146b radial nach außen und die Verstärkungsbereiche 146c, 146d zu einander entgegengesetzten Umfangsrichtungen der Brennraum-Durchgangsöffnung 114 hin umgelegt worden.

Zwischen den Verstärkungsbereichen 146a bis 146d verbleibt eine im wesentlichen quadratische Durchgangsöffnung 150.

Alternativ hierzu könnte auch ein Verformungsbegrenzungselement vorgesehen sein, welches drei oder mehr als vier Verstärkungsbereiche aufweist, welche um eine polygonale Durchgangsöffnung mit einer entsprechenden Seitenzahl angeordnet sind.

Das in der Umfangsrichtung der Brennraum-Durchgangsöffnung 114 auf das Verformungsbegrenzungselement 142d folgende Verformungsbegrenzungselement 142e weist einen dem Verformungsbegrenzungselement 142d entsprechenden Aufbau auf, ist jedoch um eine senkrecht zur Ebene der Verformungsbegrenzungsplatte 106 gerichtete Drehachse um einen Winkel von ungefähr 45° gedreht, so daß die Trennlinie 148a radial zu der Brennraum-Durchgangsöffnung 114 ausgerichtet ist, während bei dem Verformungsbegrenzungselement 142d die Winkelhalbierende der beiden Trennlinien 148a und 148b radial zur Brennraum-Durchgangsöffnung 114 ausgerichtet ist.

Das in der Umfangsrichtung der Brennraum-Durchgangsöffnung 114 auf das Verformungsbegrenzungselement 142e folgende Verformungsbegrenzungselement 142f entspricht hinsichtlich seines Aufbaus und seiner Ausrichtung dem Verformungsbegrenzungselement 142d; insbesondere ist bei dem Verformungsbegrenzungselement 142f die Winkelhalbierende der beiden Trennlinien 148a und 148b radial zu der Brennraum-Durchgangsöffnung 114 ausgerichtet.

Auf das Verformungsbegrenzungselement 142f folgt längs der Umfangsrichtung der Brennraum-Durchgangsöffnung 114 ein Verformungsbegrenzungselement 142g, welches einen dem Verformungsbegrenzungselement 142a entsprechenden Aufbau aufweist, sich jedoch über einen kleineren Umfangswinkel erstreckt.

Auf das Verformungsbegrenzungselement 142g folgt längs der Umfangsrichtung der Brennraum-Durchgangsöffnung 114 ein Verformungsbegrenzungselement 142h, dessen Verstärkungsbereich 146 am Rand einer Fluid-Durchgangsöffnung 118" angeordnet ist.

Der Verstärkungsbereich 146 des Verformungsbegrenzungselements 142h wird dadurch gebildet, daß beim Ausstanzen der Fluid-Durchgangsöffnung 118" ein in die Fluid-Durchgangsöffnung 118" überstehender Bereich der Verformungsbegrenzungsplatte 106 belassen worden ist, welcher anschließend längs des Randes der Fluid-Durchgangsöffnung 118" nach oben aus der Ebene der Verformungsbegrenzungsplatte 106 herausgebogen und - vom Mittelpunkt 138 der Brennraum-Durchgangsöffnung 114 aus gesehen - radial nach innen auf die Oberseite 140 der Verformungsbegrenzungsplatte 106 umgelegt worden ist.

Auf das Verformungsbegrenzungselement 142h folgt längs der Umfangsrichtung der Brennraum-Durchgangsöffnung 114 ein Verformungselement 142i, dessen Aufbau dem Aufbau des Verformungsbegrenzungselements 142a entspricht, welches sich jedoch über einen kleineren Umfangswinkel erstreckt.

Auf das Verformungsbegrenzungselement 142i folgt längs der Umfangsrichtung der Brennraum-Durchgangsöffnung 114 ein Verformungselement 142j, welches dadurch gebildet ist, daß längs einer ringförmig geschlossenen Trennlinie 148c eine sich längs der Umfangsrichtung der Brennraum-Durchgangsöffnung 114 erstreckende, schmale Durchgangsöffnung 158 aus der Verformungsbegrenzungsplatte 106 herausgestanzt worden ist, deren Endbereiche 160 sich in Richtung auf die Brennraum-Durchgangsöffnung 114 zu erstrecken. Der hierdurch freigestanzte, zwischen den Endbereichen 160 der Durchgangsöffnung 158 liegende Bereich der Verformungsbegrenzungsplatte 106 ist anschließend längs einer Biegelinie 152, welche die Enden der Durchgangsöffnung 158 miteinander verbindet, aus der Ebene der Verformungsbegrenzungsplatte 106 herausgebogen und - vom Mittelpunkt 138 der Brennraum-Durchgangsöffnung 114 aus gesehen - radial nach innen auf die Oberseite 140 der Verformungsbegrenzungsplatte 106 umgelegt worden, um so einen Verstärkungsbereich 146 des Verformungsbegrenzungselements 142j zu bilden.

Die durch das Herausbiegen des Verstärkungsbereichs 146 aus der Ebene der Verformungsbegrenzungsplatte 106 gebildete Durchgangsöffnung 162 bildet zusammen mit der längs der ringförmig geschlossenen Trennlinie 148c ausgestanzten Durchgangsöffnung 158 eine an den Verstärkungsbereich 146 des Verformungsbegrenzungselements 142j angrenzende Durchgangsöffnung 164.

Auf das Verformungsbegrenzungselement 142j folgt längs der Umfangsrichtung der Brennraum-Durchgangsöffnung 114 ein Verformungsbegrenzungselement 142k, welches in seinem Aufbau dem Verformungsbegrenzungselement 142a entspricht und sich über ungefähr denselben Umfangswinkel erstreckt.

Auf das Verformungsbegrenzungselement 142k folgt in der Umfangsrichtung der Brennraum-Durchgangsöffnung 114 ein Verformungsbegrenzungselement 1421, welches in entsprechender Weise wie das Verformungsbegrenzungselement 142a gebildet ist, sich jedoch nicht ausschließlich längs der Umfangsrichtung der Brennraum-Durchgangsöffnung 114 erstreckt, sondern neben einem sich längs der Umfangsrichtung der Brennraum-Durchgangsöffnung 114 erstreckenden Abschnitt 166 einen sich längs der Umfangsrichtung der benachbarten Brennraum-Durchgangsöffnung 114' erstreckenden Abschnitt 168 sowie einen die beiden Abschnitte 166 und 168 miteinander verbindenden,-von den Mittelpunkten 138 der Brennraum-Durchgangsöffnungen 114, 114' aus gesehen - konvex gekrümmten mittleren Abschnitt 170 umfaßt.

Dieses Verformungsbegrenzungselement 142I dient dazu, die Verformung der die Brennraum-Durchgangsöffnungen 114, 114' umschließenden Brennraumsicken 120 im Endbereich des die beiden Brennraum-Durchgangsöffnungen 114, 114' voneinander trennenden Steges 172 zu begrenzen.

Die Ausbildung, Anordnung und Abfolge der Verformungsbegrenzungselemente 142 der äußeren Verformungsbegrenzungseinrichtung 130 muß nicht notwendigerweise der vorstehend beschriebenen entsprechen.

So wäre es insbesondere möglich, die äußere Verformungsbegrenzungseinrichtung 130 ausschließlich aus Verformungsbegrenzungselementen zusammenzusetzen, welche hinsichtlich ihres Aufbaus dem Verformungsbegrenzungselement 142a entsprechen, also einen einzigen Verstärkungsbereich 146 aufweisen, welcher längs einer Trennlinie 148 aus der Verformungsbegrenzungsplatte 106 herausgetrennt worden und längs einer Biegelinie 152 nach oben aus der Ebene der Verformungsbegrenzungsplatte 106 herausgebogen und - vom Mittelpunkt 138 der Brennraum-Durchgangsöffnung 114 aus gesehen - radial nach innen auf die Oberseite 140 der Verformungsbegrenzungsplatte 106 umgelegt worden ist.

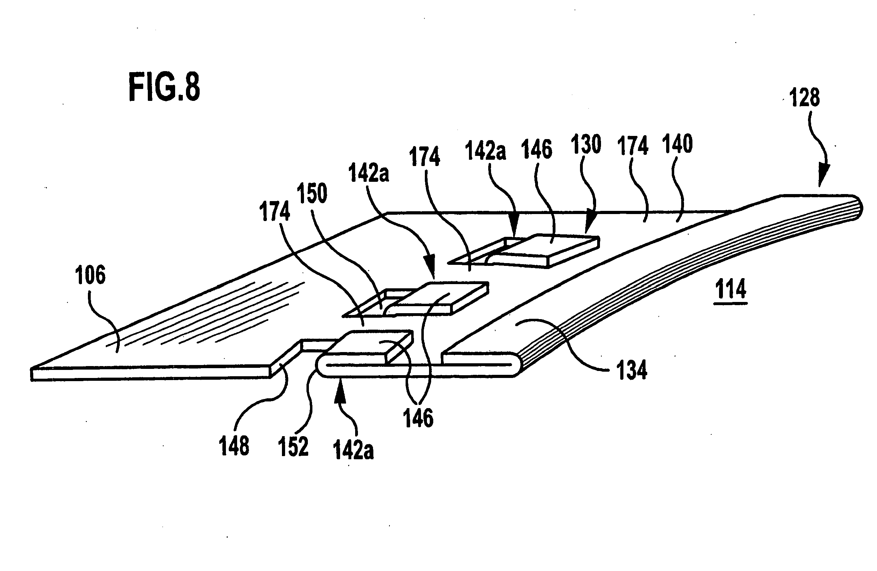

Eine aus solchen längs der Umfangsrichtung der Brennraum-Durchgangsöffnung 114 aufeinanderfolgenden Verformungsbegrenzungselementen 142a zusammengesetzte äußere Verformungsbegrenzungseinrichtung 130 ist in Fig. 8 schematisch dargestellt.

Der auf den Mittelpunkt 138 der Brennraum-Durchgangsöffnung 114 bezogene Umfangswinkel α, über welchen sich der Verstärkungsbereich 146 eines solchen Verformungsbegrenzungselements 142a erstreckt, und/oder der Umfangswinkel β, über den sich der jeweils zwischen zwei aufeinanderfolgenden Verformungsbegrenzungselementen 142a erstreckende Steg 174 erstreckt, kann längs des Umfangs der Brennraum-Durchgangsöffnung 114 konstant sein oder aber, in Abhängigkeit von der Geometrie der an die Zylinderkopfdichtung angrenzenden Bauteile und der in der Zylinderkopfdichtung 100 vorgesehenen Durchgangsöffnungen, variieren.

Um zu verhindern, daß sich die Verstärkungsbereiche 146 der Verformungsbegrenzungselemente 142 im Betrieb der Zylinderkopfdichtung 100 von der Verformungsbegrenzungsplatte 106 abheben, kann vorgesehen sein, die Verstärkungsbereiche 146, beispielsweise durch Verklebung oder Verschweißung, an der Verformungsbegrenzungsplatte 106 festzulegen.

Insbesondere kann der Verstärkungsbereich 146 eines Verformungsbegrenzungselements 142 durch Schweißpunkte 177 mit dem Bereich der Verformungsbegrenzungsplatte 106, an welchem der Verstärkungsbereich 146 anliegt, verbunden werden, wie dies in Fig. 2 am Beispiel des Verformungsbegrenzungselements 142g dargestellt ist.

Durch die Festlegung des Verstärkungsbereichs 146 eines Verformungsbegrenzungselements 142 an dem Bereich der Verformungsbegrenzungsplatte 106, an welchen der Verstärkungsbereich 146 anliegt, wird ein Abscheren des Verstärkungsbereichs 146 relativ zu den angrenzenden Stegbereichen 174 vermieden.

Um Abscherbewegungen in dem zwischen den Verformungsbegrenzungselementen 142 der äußeren Verformungsbegrenzungseinrichtung 130 liegenden Stegbereich 174 zu vermindern, ist es ferner günstig, den radial außerhalb der äußeren Verformungsbegrenzungseinrichtung 130 liegenden Bereich der Verformungsbegrenzungsplatte 106 von dem radial innerhalb der äußeren Verformungsbegrenzungseinrichtung 130 liegenden Bereich der Verformungsbegrenzungsplatte 106 zu entkoppeln.

Diese Entkopplung kann dadurch herbeigeführt werden, daß in den Stegbereichen 174 zusätzliche Sicken 176 in die Verformungsbegrenzungsplatte 106 eingebracht werden, welche sich längs der Umfangsrichtung der Brennraum-Durchgangsöffnung 114 durch den betreffenden Stegbereich 174 erstrecken, wie dies in Fig. 2 für die Stegbereiche 174 zwischen dem Verformungsbegrenzungselement 142a und dem Verformungsbegrenzungselement 1421 sowie für den Stegbereich 174 zwischen dem Verformungsbegrenzungselement 142I und dem Verformungsbegrenzungselement 142k dargestellt ist.

Alternativ oder ergänzend hierzu kann zur Entkopplung des radial äußeren Bereichs der Verformungsbegrenzungsplatte 106 von deren radial innerem Bereich auch vorgesehen sein, daß die Verformungsbegrenzungsplatte 106 in einem oder mehreren Stegbereichen 174 mit einer anderen Dichtungsplatte der Zylinderkopfdichtung 100, d.h. mit der oberen Deckplatte 102 und/oder mit der unteren Deckplatte 104, verschweißt wird.

Die Verschweißung kann dabei an Schweißpunkten 178, wie sie in Fig. 2 dargestellt sind, oder längs sich in der Umfangsrichtung der Brennraum-Durchgangsöffnung 114 erstreckenden Schweißnähten erfolgen.

Wie aus der Draufsicht der Fig. 1 auf die Zylinderkopfdichtung 100 zu ersehen ist, weisen die Deckplatte 102, 104 der Zylinderkopfdichtung 100 außer den Brennraumsicken 120 zusätzliche Sicken 180 auf, welche die Befestigungsmittel-Durchgangsöffnung 116' bzw. die Befestigungsmittel-Durchgangsöffnung 116" ringförmig umschließen.

Um auch diese zusätzlichen Sicken 180 zu schützen, ist an der Verformungsbegrenzungsplatte 106 für jede der Sicken 180 eine zusätzliche Verformungsbegrenzungseinrichtung 182 vorgesehen. Die Verformungsbegrenzungseinrichtung 182 für die zusätzliche Sicke 180 um die Befestigungsmittel-Durchgangsöffnung 116' umfaßt als Verformungsbegrenzungselement einen Falzbördel 184, welcher dadurch gebildet ist, daß nach dem Ausstanzen der Befestigungsmittel-Durchgangsöffnung 116' der in die Befestigungsmittel-Durchgangsöffnung 116' überstehende Randbereich der Verformungsbegrenzungsplatte 106 längs des Randes der Befestigungsmittel-Durchgangsöffnung 116' aus der Ebene der Verformungsbegrenzungsplatte 106 nach oben herausgebogen und - vom Mittelpunkt der Befestigungsmittel-Durchgangsöffnung 116' aus gesehen - radial nach außen auf die Oberseite 140 der Verformungsbegrenzungsplatte 106 umgelegt worden ist.

Die Verformungsbegrenzungseinrichtung 182 für die die Befestigungsmittel-Durchgangsöffnung 116" umschließende zusätzliche Sicke 180 umfaßt mehrere, beispielsweise zwei, längs der Umfangsrichtung der Befestigungsmittel-Durchgangsöffnung 116 voneinander beabstandete Verformungsbegrenzungselemente 132, welche jeweils einen Verstärkungsbereich 146 aufweisen, der dadurch gebildet ist, daß beim Ausstanzen der Befestigungsmittel-Durchgangsöffnung 116" ein in die Befestigungsmittel-Durchgangsöffnung 116" überstehender Bereich der Verformungsbegrenzungsplatte 106 belassen wurde und dieser überstehende Bereich anschließend längs des Randes der Befestigungsmittel-Durchgangsöffnung 116" nach oben aus der Ebene der Verformungsbegrenzungsplatte 106 herausgebogen und - vom Mittelpunkt der Befestigungsmittel-Durchgangsöffnung 116" aus gesehen - radial nach außen auf die Oberseite 140 der Verformungsbegrenzungsplatte 106 umgelegt worden ist.

Wie aus der Draufsicht der Fig. 1 auf die Zylinderkopfdichtung 100 ferner zu ersehen ist, sind die Deckplatten 102, 104 der Zylinderkopfdichtung 100 mit einer längs des äußeren Randes der Deckplatten 102, 104 umlaufenden Randsicke 186 versehen.

Zur Begrenzung der Verformung dieser Randsicke 186 ist eine Randverformungsbegrenzungseinrichtung 188 an der Verformungsbegrenzungsplatte 106 vorgesehen, welche am äußeren Rand der Verformungsbegrenzungsplatte 106 angeordnete Verformungsbegrenzungselemente 190 umfaßt, von denen nur eines beispielhaft in Fig. 2 dargestellt ist.

Das Verformungsbegrenzungselement 190 umfaßt einen Verstärkungsbereich 146, welcher dadurch gebildet ist, daß beim Ausstanzen der Verformungsbegrenzungsplatte 106 ein über den äußeren Rand der Verformungsbegrenzungsplatte 106 überstehender Bereich der Verformungsbegrenzungsplatte 106 belassen wurde und dieser Bereich anschließend längs des äußeren Randes der Verformungsbegrenzungsplatte 106 nach oben aus der Ebene der Verformungsbegrenzungsplatte 106 herausgebogen und nach innen auf die Oberseite 140 der Verformungsbegrenzungsplatte 106 umgelegt worden ist.

Die Verstärkungsbereiche 146 sämtlicher vorstehend beschriebener Verformungsbegrenzungseinrichtungen 128, 130, 182 und 188 können in Längsrichtung der jeweils zugeordneten Sicke hinsichtlich ihrer Höhe und/oder Breite variabel ausgebildet sein, um eine Vergleichmäßigung der Flächenpressungsverteilung längs der betreffenden Sicke - und zwar unter Berücksichtigung der Bauteilsteifigkeiten der an die Zylinderkopfdichtungen 100 angrenzenden Bauteile sowie unter Berücksichtigung der Unterschiede in der lokalen Wärmedehnung dieser Bauteile im Betrieb der Zylinderkopfdichtung - zu erzielen.

Bei der in den Fig. 1 bis 8 dargestellten ersten Ausführungsform einer Zylinderkopfdichtung 100 sind die Verstärkungsbereiche 146 der Verformungsbegrenzungselemente sämtlich nach oben, d.h. zur Zylinderkopfseite der Verformungsbegrenzungsplatte 106 hin, aus der Ebene der Verformungsbegrenzungsplatte herausgebogen und auf die zylinderkopfseitige Oberseite 140 der Verformungsbegrenzungsplatte 106 umgelegt.

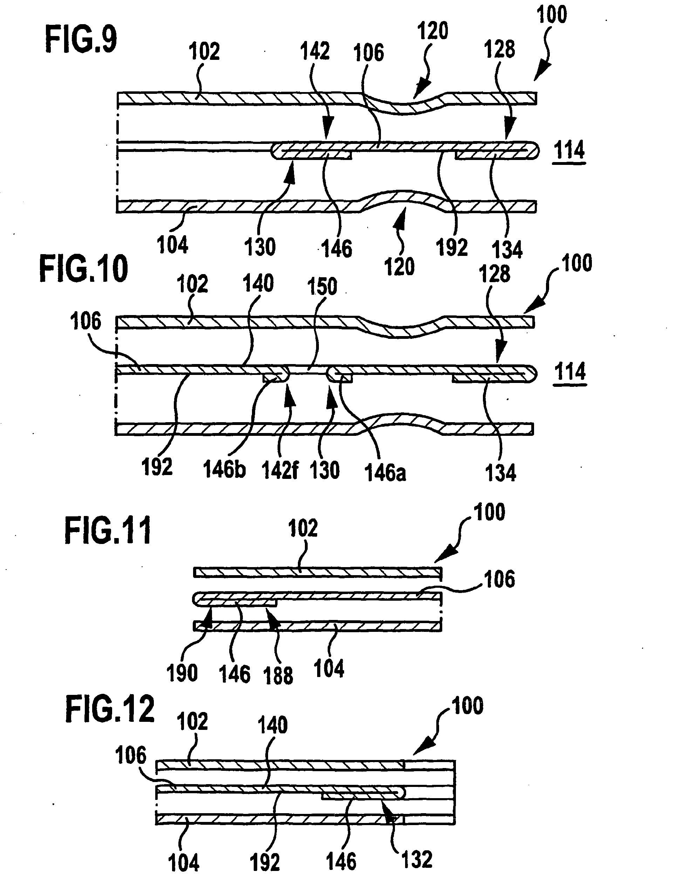

Eine in den Fig. 9 bis 12 dargestellte zweite Ausführungsform einer Zylinderkopfdichtung 100 unterscheidet sich von der vorstehend beschriebenen ersten Ausführungsform lediglich dadurch, daß die Verstärkungsbereiche 146 der Verformungsbegrenzungselemente nach unten, d.h. zur Motorblockseite der Verformungsbegrenzungsplatte hin, aus der Ebene der Verformungsbegrenzungsplatte 106 herausgebogen und auf die motorblockseitige Unterseite 192 der Verformungsbegrenzungsplatte 106 umgelegt sind.

Im übrigen stimmt die zweite Ausführungsform einer Zylinderkopfdichtung 100 hinsichtlich Aufbau und Funktion mit der ersten Ausführungsform überein, auf deren vorstehende Beschreibung insoweit Bezug genommen wird.

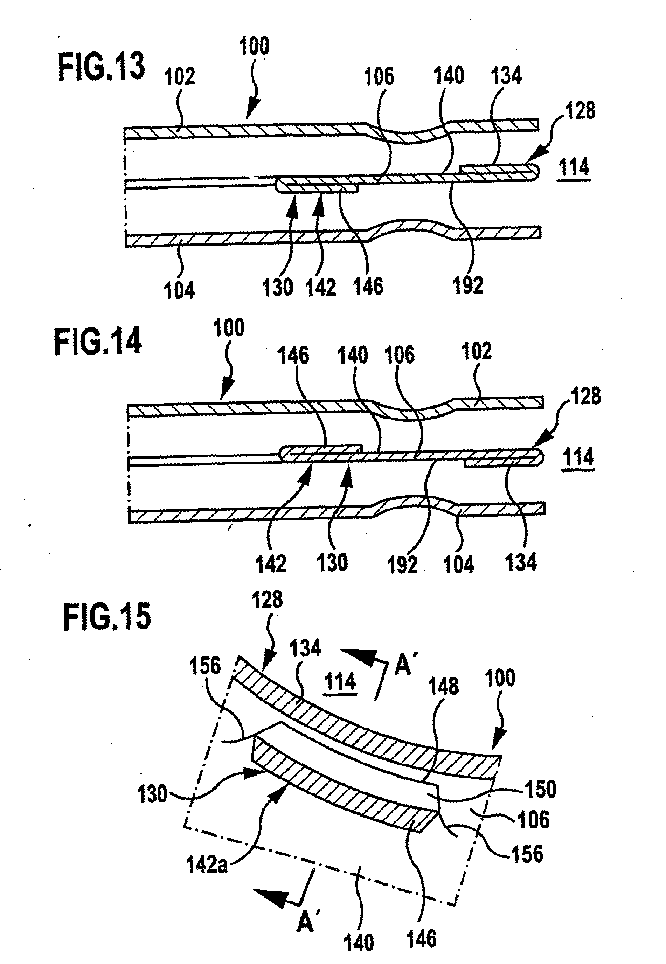

Eine in Fig. 13 dargestellte dritte Ausführungsform einer Zylinderkopfdichtung 100 unterscheidet sich von der vorstehend beschriebenen ersten Ausführungsform lediglich dadurch, daß die Verstärkungsbereiche 146 der Verformungsbegrenzungselemente 142 der äußeren Verformungsbegrenzungseinrichtung 130 zur Motorblockseite der Verformungsbegrenzungsplatte 106 hin aus der Ebene der Verformungsbegrenzungsplatte 106 herausgebogen und auf die motorblockseitige Unterseite 192 der Verformungsbegrenzungsplatte 106 umgelegt sind, während der Falzbördel 134 der inneren Verformungsbegrenzungseinrichtung 128 ebenso wie bei der ersten Ausführungsform zur Zylinderkopfseite der Verformungsbegrenzungsplatte 106 hin aus der Ebene der Verformungsbegrenzungsplatte 106 herausgebogen und auf die zylinderkopfseitige Oberseite 140 der Verformungsbegrenzungsplatte 106 umgelegt ist.

Im übrigen stimmt die dritte Ausführungsform einer Zylinderkopfdichtung hinsichtlich Aufbau und Funktion mit der ersten Ausführungsform überein, auf deren vorstehende Beschreibung insoweit Bezug genommen wird.

Eine in Fig. 14 dargestellte vierte Ausführungsform einer Zylinderkopfdichtung 100 unterscheidet sich von der vorstehend beschriebenen ersten Ausführungsform lediglich dadurch, daß der Falzbördel 134 der inneren Verformungsbegrenzungseinrichtung 128 nach unten, d.h. zur Motorblockseite der Verformungsbegrenzungsplatte 106 hin, aus der Ebene der Verformungsbegrenzungsplatte 106 herausgebogen und auf die motorblockseitige Unterseite 192 der Verformungsbegrenzungsplatte 106 umgelegt ist, während die Verstärkungsbereiche 146 der Verformungsbegrenzungselemente 142 der äußeren Verformungsbegrenzungseinrichtung 130, wie bei der ersten Ausführungsform, zur Zylinderkopfseite der Verformungsbegrenzungsplatte 106 hin aus der Ebene der Verformungsbegrenzungsplatte 106 herausgebogen und auf die zylinderkopfseitige Oberseite 140 der Verformungsbegrenzungsplatte 106 umgelegt sind.

Im übrigen stimmt die vierte Ausführungsform einer Zylinderkopfdichtung 100 hinsichtlich Aufbau und Funktion mit der ersten Ausführungsform überein, auf deren vorstehende Beschreibung insoweit Bezug genommen wird.

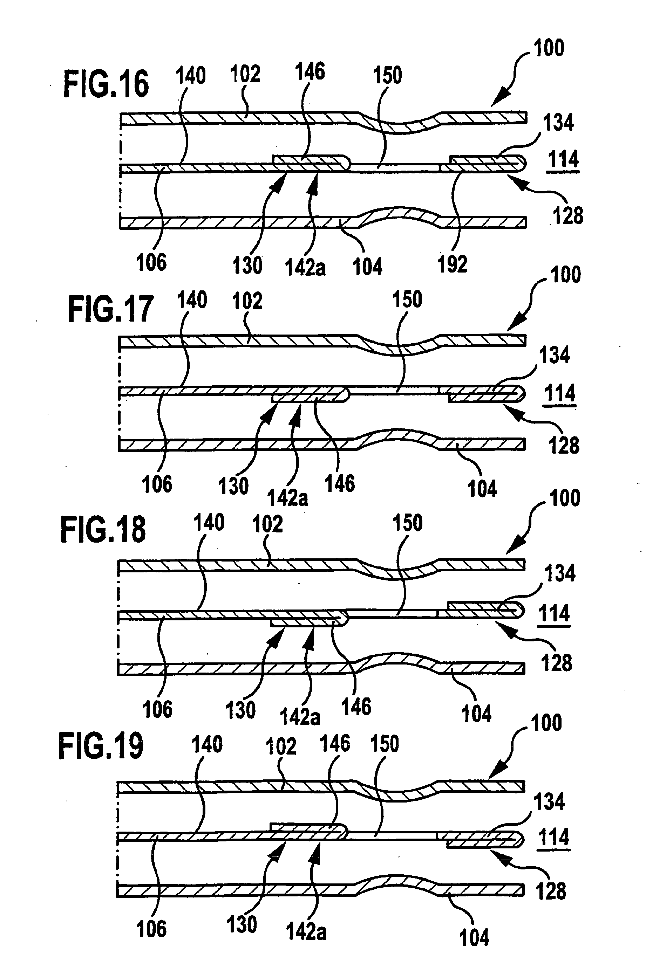

Eine in den Fig. 15 und 16 dargestellte fünfte Ausführungsform einer Zylinderkopfdichtung 100 unterscheidet sich von der vorstehend beschriebenen ersten Ausführungsform dadurch, daß die Verstärkungsbereiche 146 der Verformungsbegrenzungselemente 142a, 142c, 142g, 142i, 142j, 142k und 142l nicht - vom Mittelpunkt 138 der Brennraum-Durchgangsöffnung 114 aus gesehen - radial nach innen, sondern vielmehr radial nach außen auf die Oberseite 140 der Verformungsbegrenzungsplatte 106 umgelegt sind.

Folglich sind bei dieser fünften Ausführungsform die durch das Herausbiegen der Verstärkungsbereiche 146 aus der Ebene der Verformungsbegrenzungsplatte 106 gebildeten Durchgangsöffnungen 150 in der Verformungsbegrenzungsplatte 106 auf der der Brennraum-Durchgangsöffnung 114 zugewandten Seite der Verstärkungsbereiche 146 angeordnet.

Ferner sind die Endabschnitte 156 der jeweiligen Trennlinien 148, welche sich in den nicht aus der Ebene der Verformungsbegrenzungsplatte 106 herausgebogenen Bereich der Verformungsbegrenzungsplatte 106 fortsetzen, - vom Mittelpunkt 138 der Brennraum-Durchgangsöffnung 114 aus gesehen - konkav gekrümmt.

Im übrigen stimmt die fünfte Ausführungsform einer Zylinderkopfdichtung 100 hinsichtlich Aufbau und Funktion mit der ersten Ausführungsform überein, auf deren vorstehende Beschreibung insoweit Bezug genommen wird.

Eine in Fig. 17 dargestellte sechste Ausführungsform einer Zylinderkopfdichtung 100 unterscheidet sich von der vorstehend beschriebenen fünften Ausführungsform lediglich dadurch, daß die Verstärkungsbereiche 146 der Verformungsbegrenzungselemente 142a, 142c, 142g, 142i, 142j, 142k und 142l nicht zur Zylinderkopfseite der Verformungsbegrenzungsplatte 106, sondern zu deren Motorblockseite hin aus der Ebene der Verformungsbegrenzungsplatte 106 herausgebogen und - vom Mittelpunkt 138 der Brennraum-Durchgangsöffnung 114 aus gesehen - radial nach außen auf die Unterseite 192 der Verformungsbegrenzungsplatte 106 umgelegt sind.

Ferner ist bei dieser Ausführungsform auch der Falzbördel 134 der inneren Verformungsbegrenzungseinrichtung 128 zur Motorblockseite hin aus der Ebene der Verformungsbegrenzungsplatte 106 herausgebogen und auf die motorblockseitige Unterseite 192 der Verformungsbegrenzungsplatte 106 umgelegt.

Im übrigen stimmt die sechste Ausführungsform einer Zylinderkopfdichtung 100 hinsichtlich Aufbau und Funktion mit der fünften Ausführungsform überein, auf deren vorstehende Beschreibung insoweit Bezug genommen wird.

Eine in Fig. 18 dargestellte siebte Ausführungsform einer Zylinderkopfdichtung 100 unterscheidet sich von der vorstehend beschriebenen fünften Ausführungsform lediglich dadurch, daß die Verstärkungsbereiche 146 der Verformungsbegrenzungselemente 142 der äußeren Verformungsbegrenzungseinrichtung 130 zur Motorblockseite hin aus der Ebene der Verformungsbegrenzungsplatte 106 herausgebogen und auf die motorblockseitige Unterseite 192 der Verformungsbegrenzungsplatte 106 umgelegt sind, während der Falzbördel 134 der inneren Verformungsbegrenzungseinrichtung 128, wie bei der fünften Ausführungsform, zur Zylinderkopfseite hin aus der Ebene der Verformungsbegrenzungsplatte 106 herausgebogen und auf die Oberseite 140 der Verformungsbegrenzungsplatte 106 umgelegt ist.

Im übrigen stimmt die siebte Ausführungsform einer Zylinderkopfdichtung 100 hinsichtlich Aufbau und Funktion mit der fünften Ausführungsform überein, auf deren vorstehende Beschreibung insoweit Bezug genommen wird.

Eine in Fig. 19 dargestellte achte Ausführungsform einer Zylinderkopfdichtung 100 unterscheidet sich von der vorstehend beschriebenen fünften Ausführungsform lediglich dadurch, daß der Falzbördel 134 der inneren Verformungsbegrenzungseinrichtung 128 zur Motorblockseite hin aus der Ebene der Verformungsbegrenzungsplatte 106 herausgebogen und auf die motorblockseitige Unterseite 192 der Verformungsbegrenzungsplatte 106 umgelegt ist, während die Verstärkungsbereiche 146 der Verformungsbegrenzungselemente 142 der äußeren Verformungsbegrenzungseinrichtung 130, wie bei der fünften Ausführungsform, zur Zylinderkopfseite hin aus der Ebene der Verformungsbegrenzungsplatte 106 herausgebogen und radial nach außen auf die Oberseite 140 der Verformungsbegrenzungsplatte 106 umgelegt sind.

Im übrigen stimmt die achte Ausführungsform einer Zylinderkopfdichtung 100 hinsichtlich Aufbau und Funktion mit der fünften Ausführungsform überein, auf deren vorstehende Beschreibung insoweit Bezug genommen wird.

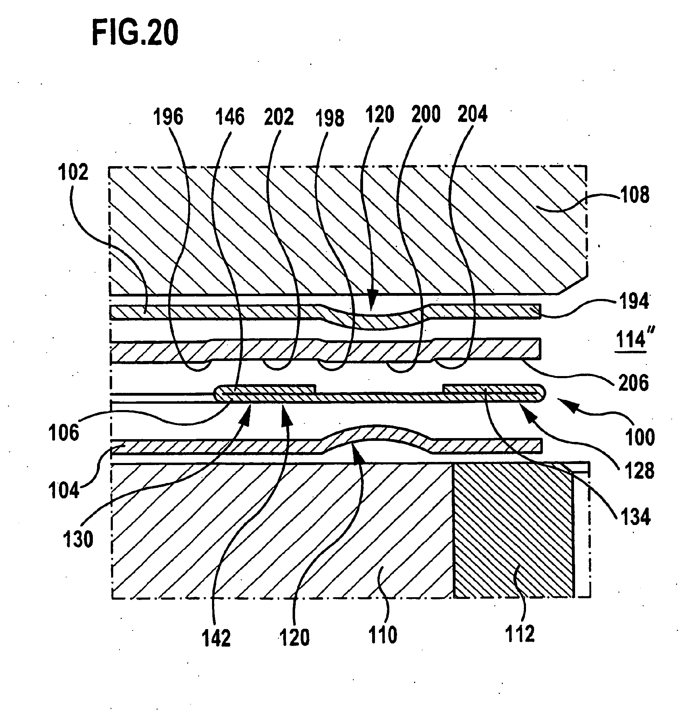

Eine in Fig. 20 dargestellte neunte Ausführungsform einer Zylinderkopfdichtung 100 unterscheidet sich von der vorstehend beschriebenen ersten Ausführungsform lediglich dadurch, daß zwischen der oberen Deckplatte 102 und der Verformungsbegrenzungsplatte 106 der Zylinderkopfdichtung 100 eine zusätzliche, im wesentliche ebene Distanzplatte 194 angeordnet ist.

Diese Distanzplatte 194 weist eine radial außerhalb der Verstärkungsbereiche 146 der äußeren Verformungsbegrenzungseinrichtung 130 an der Verformungsbegrenzungsplatte 106 liegende äußere Abkantung 196 und eine radial innerhalb der Verstärkungsbereiche 146 der Verformungsbegrenzungselemente 142 der äußeren Verformungsbegrenzungseinrichtung 130 liegende mittlere Abkantung 198 auf, so daß zwischen der äußeren Abkantung 196 und der mittleren Abkantung 198 an der der Verformungsbegrenzungsplatte 106 zugewandten Unterseite 200 der Distanzplatte 194 ein zurückgesetzter Bereich 202 ausgebildet ist.

Ferner weist die Distanzplatte 194 eine radial außerhalb des Falzbördels 134 der inneren Verformungsbegrenzungseinrichtung 128 an der Verformungsbegrenzungsplatte 106 liegende innere Abkantung 204 auf, durch welche an der Unterseite 200 der Distanzplatte 194 ein zwischen der inneren Abkantung 204 und dem inneren Rand der Distanzplatte 194 angeordneter zurückgesetzter Bereich 206 gebildet ist.

Im übrigen stimmt die neunte Ausführungsform einer Zylinderkopfdichtung 100 mit der ersten Ausführungsform überein, auf deren vorstehende Beschreibung insoweit Bezug genommen wird.

## Patentansprüche

1. Zylinderkopfdichtung, umfassend
mindestens eine gesickte Dichtungsplatte (102, 104), die mindestens eine Brennraum-Durchgangsöffnung (114") und eine die Brennraum-Durchgangsöffnung (114") umschließende höhenverformbare Sicke (120) umfasst, und
mindestens eine der Sicke (120) benachbarte Verformungsbegrenzungseinrichtung (130), welche mindestens ein an einer Verformungsbegrenzungsplatte (106) der Zylinderkopfdichtung (100) angeordnetes Verformungsbegrenzungselement (142) umfasst,
wobei die Verformungsbegrenzungsplatte (106) eine Brennraum-Durchgangsöffnung (114) umfasst,
**dadurch gekennzeichnet,**
**dass** das Verformungsbegrenzungselement (142) mindestens einen Verstärkungsbereich (146) aufweist, der von der Brennraum-Durchgangsöffnung (114") der gesickten Dichtungsplatte (102, 104) und von der Brennraum-Durchgangsöffnung (114) der Verformungsbegrenzungsplatte (106) beabstandet ist und durch Heraustrennen eines Bereichs der Verformungsbegrenzungsplatte (106) längs einer Trennlinie (148) und anschließendes Herausbiegen dieses Bereichs aus der Ebene der Verformungsbegrenzungsplatte (106) gebildet ist,
wobei die Verformungsbegrenzungsplatte (106) eine dem mindestens einen Verformungsbegrenzungselement (142) benachbarte, von der Brennraum-Durchgangsöffnung (114) der Verformungsbegrenzungsplatte (106) verschiedene Durchgangsöffnung (150) aufweist.

2. Zylinderkopfdichtung nach Anspruch 1, **dadurch gekennzeichnet, dass** der Verstärkungsbereich (146) des mindestens einen Verformungsbegrenzungselements (142) im Wesentlichen parallel zu der Ebene der Verformungsbegrenzungsplatte (106) ausgerichtet ist.

3. Zylinderkopfdichtung nach einem der Ansprüche 1 oder 2, **dadurch gekennzeichnet, dass** der Verstärkungsbereich (146) des mindestens einen Verformungsbegrenzungselements (142) an einer der Hauptflächen (140, 192) der Verformungsbegrenzungsplatte (106), vorzugsweise flächig, anliegt.

4. Zylinderkopfdichtung nach einem der Ansprüche 1 bis 3, **dadurch gekennzeichnet, dass** der Verstärkungsbereich (146) des mindestens einen Verformungsbegrenzungselements (142) zu der Zylinderkopfseite der Verformungsbegrenzungsplatte (106) hin aus der Ebene der Verformungsbegrenzungsplatte (106) herausgebogen ist.

5. Zylinderkopfdichtung nach einem der Ansprüche 1 bis 3, **dadurch gekennzeichnet, dass** der Verstärkungsbereich (146) des mindestens einen Verformungsbegrenzungselements (142) zu der Motorblockseite der Verformungsbegrenzungsplatte (106) hinaus der Ebene der Verformungsbegrenzungsplatte (106) herausgebogen ist.

6. Zylinderkopfdichtung nach einem der Ansprüche 1 bis 5, **dadurch gekennzeichnet, dass** die Verformungsbegrenzungsplatte (106) mit der gesickten Dichtungsplatte (102, 104) identisch ist.

7. Zylinderkopfdichtung nach einem der Ansprüche 1 bis 5, **dadurch gekennzeichnet, dass** die Verformungsbegrenzungsplatte (106) eine von der gesickten Dichtungsplatte (102, 104) verschiedene Dichtungsplatte der Zylinderkopfdichtung (100) ist.

8. Zylinderkopfdichtung nach Anspruch 7, **dadurch gekennzeichnet, dass** zwischen der Verformungsbegrenzungsplatte (106) und der gesickten Dichtungsplatte (102, 104) eine weitere Dichtungsplatte (194) der Zylinderkopfdichtung (100) angeordnet ist.

9. Zylinderkopfdichtung nach Anspruch 8, **dadurch gekennzeichnet, dass** der Verstärkungsbereich (146) des mindestens einen Verformungsbegrenzungselements (142) zu der der weiteren Dichtungsplatte (194) der Zylinderkopfdichtung (100) zugewandten Seite der Verformungsbegrenzungsplatte (106) hin aus der Ebene der Verformungsbegrenzungsplatte (106) herausgebogen ist.

10. Zylinderkopfdichtung nach einem der Ansprüche 1 bis 9, **dadurch gekennzeichnet, dass** das mindestens eine Verformungsbegrenzungselement (142) auf der der Brennraum-Durchgangsöffnung (114") abgewandten Seite der Sicke (120) angeordnet ist.

11. Zylinderkopfdichtung nach einem der Ansprüche 1 bis 10, **dadurch gekennzeichnet, dass** die Verformungsbegrenzungseinrichtung (130) eine Mehrzahl von Verformungsbegrenzungselementen (142) umfasst, die längs der Umfangsrichtung der Brennraum-Durchgangsöffnung (114) aufeinanderfolgen.

12. Zylinderkopfdichtung nach Anspruch 11, **dadurch gekennzeichnet, dass** die Verformungsbegrenzungsplatte (106) im Bereich (174) zwischen zwei längs der Umfangsrichtung der Brennraum-Durchgangsöffnung (114) aufeinanderfolgenden Verformungsbegrenzungselementen (142), vorzugsweise durch Verschweißung, mit einer anderen Dichtungsplatte (102, 104) der Zylinderkopfdichtung (100) verbunden ist.

13. Zylinderkopfdichtung nach einem der Ansprüche 11 oder 12, **dadurch gekennzeichnet, dass** die Verformungsbegrenzungsplatte (106) im Bereich (174) zwischen zwei längs der Umfangsrichtung der Brennraum-Durchgangsöffnung (114) aufeinanderfolgenden Verformungsbegrenzungselementen (142) mit einer Prägung, vorzugsweise mit einer Sicke (176), versehen ist.

14. Zylinderkopfdichtung nach einem der Ansprüche 1 bis 13, **dadurch gekennzeichnet, dass** die Zylinderkopfdichtung (100) eine äußere Verformungsbegrenzungseinrichtung (130) und eine innere Verformungsbegrenzungseinrichtung (128) umfasst.

15. Zylinderkopfdichtung nach Anspruch 14, **dadurch gekennzeichnet, dass** die äußere Verformungsbegrenzungseinrichtung (130) und die innere Verformungsbegrenzungseinrichtung (128) an der Verformungsbegrenzungsplatte (106) angeordnet sind.

16. Zylinderkopfdichtung nach Anspruch 15, **dadurch gekennzeichnet, dass** die Verformungsbegrenzungselemente (132, 142) der äußeren Verformungsbegrenzungseinrichtung (130) und der inneren Verformungsbegrenzungseinrichtung (128) zu derselben Seite der Verformungsbegrenzungsplatte (106) hin über die jeweils angrenzenden Bereiche der Verformungsbegrenzungsplatte (106) überstehen.

17. Zylinderkopfdichtung nach Anspruch 15, **dadurch gekennzeichnet, dass** die Verformungsbegrenzungselemente (132, 142) der äußeren Verformungsbegrenzungseinrichtung (130) und der inneren Verformungsbegrenzungseinrichtung (128) zu verschiedenen Seiten der Verformungsbegrenzungsplatte (106) hin über die jeweils angrenzenden Bereiche der Verformungsbegrenzungsplatte (106) überstehen.

18. Zylinderkopfdichtung nach einem der Ansprüche 14 bis 17, **dadurch gekennzeichnet, dass** die innere Verformungsbegrenzungseinrichtung (128) ein Verformungsbegrenzungselement (132) umfasst, das einen an die Brennraum-Durchgangsöffnung (114) der Verformungsbegrenzungsplatte (106) angrenzenden, durch Herausbiegen des Randbereiches der Brennraum-Durchgangsöffnung (114) aus der Ebene der Verformungsbegrenzungsplatte (106) gebildeten Verstärkungsbereich (134) aufweist.

19. Zylinderkopfdichtung nach einem der Ansprüche 1 bis 18, **dadurch gekennzeichnet, dass** mindestens einer der Verstärkungsbereiche (146) zu der Brennraum-Durchgangsöffnung (114) der Verformungsbegrenzungsplatte (106) hin aus der Ebene der Verformungsbegrenzungsplatte (106) herausgebogen ist.

20. Zylinderkopfdichtung nach einem der Ansprüche 1 bis 19, **dadurch gekennzeichnet, dass** mindestens einer der Verstärkungsbereiche (146) von der Brennraum-Durchgangsöffnung (114) der Verformungsbegrenzungsplatte (106) weg aus der Ebene der Verformungsbegrenzungsplatte (106) herausgebogen ist.

21. Zylinderkopfdichtung nach einem der Ansprüche 19 oder 20, **dadurch gekennzeichnet, dass** die Verformungsbegrenzungseinrichtung (130) eine Mehrzahl von Verformungsbegrenzungsetementen (142) umfasst, die längs der Umfangsrichtung der Brennraum-Durchgangsöffnung (114) aufeinanderfolgen, wobei die Verstärkungsbereiche (146) der Verformungsbegrenzungselemente (142) abwechselnd zu der Brennraum-Durchgangsöffnung (114) hin und von der Brennraum-Durchgangsöffnung (114) weg aus der Ebene der Verformungsbegrenzungsplatte (106) herausgebogen sind.

22. Zylinderkopfdichtung nach einem der Ansprüche 1 bis 21, **dadurch gekennzeichnet, dass** mindestens ein Verformungsbegrenzungselement (142d, 142e, 142f) mehrere Verstärkungsbereiche (146a, 146b, 146c, 146d) aufweist, welche zu verschiedenen Richtungen hin aus der Ebene der Verformungsbegrenzungsplatte (106) herausgebogen sind.

23. Zylinderkopfdichtung nach einem der Ansprüche 1 bis 22, **dadurch gekennzeichnet, dass** sich die Trennlinie (148) mindestens eines Verstärkungsbereichs (146) in einen nicht aus der Ebene der Verformungsbegrenzungsplatte (106) herausgebogenen Bereich der Verformungsbegrenzungsplatte (106) fortsetzt.

24. Zylinderkopfdichtung nach einem der Ansprüche 1 bis 23, **dadurch gekennzeichnet, dass** die Trennlinie (148c) mindestens eines Verstärkungsbereichs (146) ringförmig geschlossen und der von der Trennlinie (148c) umschlossene Bereich der Verformungsbegrerizungsplatte (106) von der Verformungsbegrenzungsplatte (106) abgetrennt worden ist.

25. Zylinderkopfdichtung nach einem der Ansprüche 1 bis 24, **dadurch gekennzeichnet, dass** die durch das Herausbiegen des Verstärkungsbereichs (146) des mindestens einen Verformungsbegrenzungselements (142) aus der Ebene der Verformungsbegrenzungsplatte (106) entstandene Durchgangsöffnung (162) einen Teil einer größeren Durchgangsöffnung (164) in der Verformungsbegrenzungsplatte (106) bildet.

26. Zylinderkopfdichtung nach einem der Ansprüche 1 bis 25, **dadurch gekennzeichnet, dass** die Zylinderkopfdichtung (100) neben der Brennraum-Durchgangsöffnung (114, 114") bzw. neben den Brennraum-Durchgangsöffnungen (114, 114") mindestens eine weitere Durchgangsöffnung (116', 116") umfasst, dass mindestens eine Dichtungsplatte (102, 104) der Zylinderkopfdichtung (100) mit einer die weitere Durchgangsöffnung (116', 116") umschließenden zusätzlichen Sicke (180) versehen ist und dass die Zylinderkopfdichtung (100) eine zusätzliche Verformungsbegrenzungseinrichtung (182) für die zusätzliche Sicke (180) umfasst.

27. Zylinderkopfdichtung nach Anspruch 26, **dadurch gekennzeichnet, dass** die zusätzliche Verformungsbegrenzungseinrichtung (182) an der Verformungsbegrenzungsplatte (106) angeordnet ist.

28. Zylinderkopfdichtung nach einem der Ansprüche 26 oder 27, **dadurch gekennzeichnet, dass** die zusätzliche Verformungsbegrenzungseinrichtung (182) mindestens ein Verformungsbegrenzungselement (184, 132) umfasst, das mindestens einen Verstärkungsbereich (184, 146) aufweist, welcher durch Herausbiegen eines Bereiches der Verformungsbegrenzungsplatte (106) aus der Ebene der Verformungsbegrenzungsplatte (106) heraus gebildet ist.

29. Zylinderkopfdichtung nach einem der Ansprüche 26 bis 28, **dadurch gekennzeichnet, dass** die zusätzliche Durchgangsöffnung (116', 116") eine Befestigungsmittet-Durchgangsöffnung ist.

30. Zylinderkopfdichtung nach einem der Ansprüche 1 bis 29, **dadurch gekennzeichnet, dass** mindestens eine Dichtungsplatte (102, 104) der Zylinderkopfdichtung (100) mit einer längs des äußeren Randes der Dichtungsplatte (102, 104) verlaufenden Randsicke (186) versehen ist und dass die Zylinderkopfdichtung (100) eine Randverformungsbegrenzungseinrichtung (188) für die Randsicke (186) umfasst.

31. Zylinderkopfdichtung nach Anspruch 30, **dadurch gekennzeichnet, dass** die Randverformungsbegrenzungseinrichtung (188) an der Verformungsbegrenzungsplatte (106) angeordnet ist.

32. Zylinderkopfdichtung nach einem der Ansprüche 30 oder 31, **dadurch gekennzeichnet, dass** die Randverformungsbegrenzungseinrichtung (188) mindestens ein Verformungsbegrenzungselement (190) umfasst, das mindestens einen Verstärkungsbereich (146) aufweist, welcher durch Herausbiegen eines Randbereiches der Verformungsbegrenzungsplatte (106) aus der Ebene der Verformungsbegrenzungsplatte (106) gebildet ist.

## Claims

1. Cylinder head gasket, comprising
at least one beaded gasket sheet (102, 104), which comprises at least one combustion-chamber through-opening (114") and a bead (120)which is deformable in height and which surrounds the combustion-chamber through-opening (114"), and
at least one deformation-limiting arrangement (130), which is adjacent to the bead (120) and comprises at least one deformation-limiting element (142) disposed on a deformation-limiting sheet (106) of the cylinder head gasket (100),
wherein the deformation-limiting sheet (106) comprises a combustion-chamber through-opening (114),
**characterized in**
**that** the deformation-limiting element (142) has at least one reinforcing region (146), which is spaced apart from the combustion-chamber through-opening (114") of the beaded gasket sheet (102, 104) and from the combustion-chamber through-opening (114) of the deformation-limiting sheet (106) and is formed by separating out a region of the deformation-limiting sheet (106) along a separation line (148) and then bending said region out of the plane of the deformation-limiting sheet (106),
wherein the deformation-limiting sheet (106) has a through-opening (150), which is adjacent to the at least one deformation-limiting element (142) and is different from the combustion-chamber through-opening (114) of the deformation-limiting sheet 106).

2. Cylinder head gasket according to claim 1, **characterized in that** the reinforcing region (146) of the at least one deformation-limiting element (142) is oriented substantially parallel to the plane of the deformation-limiting sheet (106).

3. Cylinder head gasket according to one of claims 1 or 2, **characterized in that** the reinforcing region (146) of the at least one deformation-limiting element (142) lies, preferably flat, against one of the major faces (140, 192) of the deformation-limiting sheet (106).

4. Cylinder head gasket according to one of claims 1 to 3, **characterized in that** the reinforcing region (146) of the at least one deformation-limiting element (142) is bent in the direction of the cylinder head side of the deformation-limiting sheet (106) out of the plane of the deformation-limiting sheet (106).

5. Cylinder head gasket according to one of claims 1 to 3, **characterized in that** the reinforcing region (146) of the at least one deformation-limiting element (142) is bent in the direction of the engine block side of the deformation-limiting sheet (106) out of the plane of the deformation-limiting sheet (106).

6. Cylinder head gasket according to one of claims 1 to 5, **characterized in that** the deformation-limiting sheet (106) is identical to the beaded gasket sheet (102, 104).

7. Cylinder head gasket according to one of claims 1 to 5, **characterized in that** the deformation-limiting sheet (106) is a different gasket sheet of the cylinder head gasket (100) from the beaded gasket sheet (102, 104).

8. Cylinder head gasket according to claim 7, **characterized in that** disposed between the deformation-limiting sheet (106) and the beaded gasket sheet (102, 104) is a further gasket sheet (194) of the cylinder head gasket (100).

9. Cylinder head gasket according to claim 8, **characterized in that** the reinforcing region (146) of the at least one deformation-limiting element (142) is bent in the direction of the side of the deformation-limiting sheet (106) facing the further gasket sheet (194) of the cylinder head gasket (100) out of the plane of the deformation-limiting sheet (106).

10. Cylinder head gasket according to one of claims 1 to 9, **characterized in that** the at least one deformation-limiting element (142) is disposed at the side of the bead (120) remote from the combustion-chamber through-opening (114").

11. Cylinder head gasket according to one of claims 1 to 10, **characterized in that** the deformation-limiting arrangement (130) comprises a plurality of deformation-limiting elements (142) arranged successively in the peripheral direction of the combustion-chamber through-opening (114).

12. Cylinder head gasket according to claim 11, **characterized in that** the deformation-limiting sheet (106) in the region (174) between two deformation-limiting elements (142) succeeding one another in the peripheral direction of the combustion-chamber through-opening (114) is connected, preferably by welding, to another gasket sheet (102, 104) of the cylinder head gasket (100).

13. Cylinder head gasket according to one of claims 11 or 12, **characterized in that** the deformation-limiting sheet (106) in the region (174) between two deformation-limiting elements (142) succeeding one another in the peripheral direction of the combustion-chamber through-opening (114) is provided with a stamping, preferably with a bead (176).

14. Cylinder head gasket according to one of claims 1 to 13, **characterized in that** the cylinder head gasket (100) comprises an outer deformation-limiting arrangement (130) and an inner deformation-limiting arrangement (128).

15. Cylinder head gasket according to claim 14, **characterized in that** the outer deformation-limiting arrangement (130) and the inner deformation-limiting arrangement (128) are disposed on the deformation-limiting sheet (106).

16. Cylinder head gasket according to claim 15, **characterized in that** the deformation-limiting elements (132, 142) of the outer deformation-limiting arrangement (130) and the inner deformation-limiting arrangement (128) project in the direction of the same side of the deformation-limiting sheet (106) from the in each case adjoining regions of the deformation-limiting sheet (106).

17. Cylinder head gasket according to claim 15, **characterized in that** the deformation-limiting elements (132, 142) of the outer deformation-limiting arrangement (130) and the inner deformation-limiting arrangement (128) project in the direction of different sides of the deformation-limiting sheet (106) from the in each case adjoining regions of the deformation-limiting sheet (106).

18. Cylinder head gasket according to one of claims 14 to 17, **characterized in that** the inner deformation-limiting arrangement (128) comprises a deformation-limiting element (132) that has a reinforcing region (134) adjoining the combustion-chamber through-opening (114) of the deformation-limiting sheet (106) and that is formed by bending the edge region of the combustion-chamber through-opening (114) out of the plane of the deformation-limiting sheet (106).

19. Cylinder head gasket according to one of claims 1 to 18, **characterized in that** at least one of the reinforcing regions (146) is bent out of the plane of the deformation-limiting sheet (106) in the direction of the combustion-chamber through-opening (114) of the deformation-limiting sheet (106).

20. Cylinder head gasket according to one of claims 1 to 19, **characterized in that** at least one of the reinforcing regions (146) is bent in the direction away from the combustion-chamber through-opening (114) of the deformation-limiting sheet (106) out of the plane of the deformation-limiting sheet (106).

21. Cylinder head gasket according to one of claims 19 or 20, **characterized in that** the deformation-limiting arrangement (130) comprises a plurality of deformation-limiting elements (142) that are arranged successively in the peripheral direction of the combustion-chamber through-opening (114), wherein the reinforcing regions (146) of the deformation-limiting elements (142) are bent alternately in the direction towards and in the direction away from the combustion-chamber through-opening (114) out of the plane of the deformation-limiting sheet (106).

22. Cylinder head gasket according to one of claims 1 to 21, **characterized in that** at least one deformation-limiting element (142d, 142e, 142f) has a plurality of reinforcing regions (146a, 146b, 146c, 146d) that are bent in various directions out of the plane of the deformation-limiting sheet (106).

23. Cylinder head gasket according to one of claims 1 to 22, **characterized in that** the separation line (148) of at least one reinforcing region (146) continues into a region of the deformation-limiting sheet (106) that is not bent out of the plane of the deformation-limiting sheet (106).

24. Cylinder head gasket according to one of claims 1 to 23, **characterized in that** the separation line (148c) of at least one reinforcing region (146) is closed in a ring-shaped manner and the region of the deformation-limiting sheet (106) that is surrounded by the separation line (148c) has been separated from the deformation-limiting sheet (106).

25. Cylinder head gasket according to one of claims 1 to 24, **characterized in that** the through-opening (162) produced by bending the reinforcing region (146) of the at least one deformation-limiting element (142) out of the plane of the deformation-limiting sheet (106) forms part of a larger through-opening (164) in the deformation-limiting sheet (106).

26. Cylinder head gasket according to one of claims 1 to 25, **characterized in that** the cylinder head gasket (100) in addition to the combustion-chamber through-opening (114, 114") or in addition to the combustion-chamber through-openings (114, 114") comprises at least one further through-opening (116', 116"), that at least one gasket sheet (102, 104) of the cylinder head gasket (100) is provided with an additional bead (180), which surrounds the further through-opening (116', 116"), and that the cylinder head gasket (100) comprises an additional deformation-limiting arrangement (182) for the additional bead (180).

27. Cylinder head gasket according to claim 26, **characterized in that** the additional deformation-limiting arrangement (182) is disposed on the deformation-limiting sheet (106).

28. Cylinder head gasket according to one of claims 26 or 27, **characterized in that** the additional deformation-limiting arrangement (182) comprises at least one deformation-limiting element (184, 132), which has at least one reinforcing region (184, 146) that is formed by bending a region of the deformation-limiting sheet (106) out of the plane of the deformation-limiting sheet (106).

29. Cylinder head gasket according to one of claims 26 to 28, **characterized in that** the additional through-opening (116', 116") is a fastening-means through-opening.

30. Cylinder head gasket according to one of claims 1 to 29, **characterized in that** at least one gasket sheet (102, 104) of the cylinder head gasket (100) is provided with an edge bead (186), which extends along the outer edge of the gasket sheet (102, 104), and that the cylinder head gasket (100) comprises an edge deformation-limiting arrangement (188) for the edge bead (186).

31. Cylinder head gasket according to claim 30, **characterized in that** the edge deformation-limiting arrangement (188) is disposed on the deformation-limiting sheet (106).

32. Cylinder head gasket according to one of claims 30 or 31, **characterized in that** the edge deformation-limiting arrangement (188) comprises at least one deformation-limiting element (190), which has at least one reinforcing region (146) that is formed by bending an edge region of the deformation-limiting sheet (106) out of the plane of the deformation-limiting sheet (106).

## Revendications

1. Joint de culasse comprenant
■ au moins une plaque d'étanchéité (102, 104) moulurée qui comprend au moins une ouverture de passage vers la chambre de combustion (114") et une moulure (120) déformable en hauteur entourant l'ouverture de passage vers la chambre de combustion (114"), et
■ au moins un dispositif de limitation de la déformation contigu à la moulure (120) qui comporte au moins un élément de limitation de la déformation (142) disposé sur une plaque de limitation de la déformation (106) du joint de culasse (100),
■ dans lequel la plaque de limitation de la déformation (106) comporte une ouverture de passage vers la chambre de combustion (114),
**caractérisé en ce que**
l'élément de limitation de la déformation (142) présente au moins une zone de renforcement (146) qui est espacée de l'ouverture de passage vers la chambre de combustion (114") de la plaque d'étanchéité (102, 104) moulurée et de l'ouverture de passage vers la chambre de combustion (114) de la plaque de limitation de la déformation (106) et est formé par la séparation d'une zone de la plaque de limitation de la déformation (106) le long d'une ligne de séparation (148) et le pliage consécutif de cette zone hors du plan de la plaque de limitation de la déformation (106),
dans lequel la plaque de limitation de la déformation (106) présente une ouverture de passage (150) différente de l'ouverture de passage vers la chambre de combustion (114) de la plaque de limitation de la déformation (106), contiguë à l'au moins un élément de limitation de la déformation (142).

2. Joint de culasse selon la revendication 1, **caractérisé en ce que** la zone de renforcement (146) de l'au moins un élément de limitation de la déformation (142) est alignée essentiellement parallèlement au plan de la plaque de limitation de la déformation (106).

3. Joint de culasse selon l'une quelconque des revendications 1 ou 2, **caractérisé en ce que** la zone de renforcement (146) de l'au moins un élément de limitation de la déformation (142) repose, de préférence à plat, sur l'une des surfaces principales (140, 192) de la plaque de limitation de la déformation (106).

4. Joint de culasse selon l'une quelconque des revendications 1 à 3, **caractérisé en ce que** la zone de renforcement (146) de l'au moins un élément de limitation de la déformation (142) est pliée vers le côté culasse de la plaque de limitation de la déformation (106) hors du plan de la plaque de limitation de la déformation (106).

5. Joint de culasse selon l'une quelconque des revendications 1 à 3, **caractérisé en ce que** la zone de renforcement (146) de l'au moins un élément de limitation de la déformation (142) est pliée vers le côté bloc moteur de la plaque de limitation de la déformation (106) hors du plan de la plaque de limitation de la déformation (106).

6. Joint de culasse selon l'une quelconque des revendications 1 à 5, **caractérisé en ce que** la plaque de limitation de la déformation (106) est identique à la plaque d'étanchéité (102, 104) moulurée.

7. Joint de culasse selon l'une quelconque des revendications 1 à 5, **caractérisé en ce que** la plaque de limitation de la déformation (106) est une plaque d'étanchéité du joint de culasse (100) différente de la plaque d'étanchéité (102, 104) moulurée.

8. Joint de culasse selon la revendication 7, **caractérisé en ce qu'**une autre plaque d'étanchéité (194) du joint de culasse (100) est disposée entre la plaque de limitation de la déformation (106) et la plaque d'étanchéité (102, 104) moulurée.

9. Joint de culasse selon la revendication 8, **caractérisé en ce que** la zone de renforcement (146) de l'au moins un élément de limitation de la déformation (142) est pliée vers le côté de la plaque de limitation de la déformation (106) tourné vers l'autre plaque d'étanchéité (194) du joint de culasse (100) hors du plan de la plaque de limitation de la déformation (106).

10. Joint de culasse selon l'une quelconque des revendications 1 à 9, **caractérisé en ce que** l'au moins un élément de limitation de la déformation (142) est disposé sur le côté de la moulure (120) détourné de l'ouverture de passage vers la chambre de combustion (114'').

11. Joint de culasse selon l'une quelconque des revendications 1 à 10, **caractérisé en ce que** le dispositif de limitation de la déformation (130) comprend une pluralité d'éléments de limitation de la déformation (142) qui se suivent le long du sens périphérique de l'ouverture de passage vers la chambre de combustion (114).

12. Joint de culasse selon la revendication 11, **caractérisé en ce que** la plaque de limitation de la déformation (106) est reliée dans la zone (174) entre deux éléments de limitation de la déformation (142) consécutifs le long du sens périphérique de l'ouverture de passage vers la chambre de combustion (114) de préférence par soudage à une autre plaque d'étanchéité (102, 104) du joint de culasse (100).

13. Joint de culasse selon l'une quelconque des revendications 11 ou 12, **caractérisé en ce que** la plaque de limitation de la déformation (106) est marquée de préférence d'une moulure (176), dans la zone (174) entre deux éléments de limitation de la déformation (142) consécutifs le long du sens périphérique de l'ouverture de passage vers la chambre de combustion (114).

14. Joint de culasse selon l'une quelconque des revendications 1 à 13, **caractérisé en ce que** le joint de culasse (100) comporte un dispositif de limitation de la déformation extérieur (130) et un dispositif de limitation de la déformation intérieur (128).

15. Joint de culasse selon la revendication 14, **caractérisé en ce que** le dispositif de limitation de la déformation (130) extérieur et le dispositif de limitation de la déformation (128) intérieur sont disposés au niveau de la plaque de limitation de la déformation (106).

16. Joint de culasse selon la revendication 15, **caractérisé en ce que** les éléments de limitation de la déformation (132, 134) du dispositif de limitation de la déformation (130) extérieur et du dispositif de limitation de la déformation (128) intérieur dépassent des zones contiguës respectives de la plaque de limitation de la déformation (106), vers le même côté de la plaque de limitation de la déformation (106).

17. Joint de culasse selon la revendication 15, **caractérisé en ce que** les éléments de limitation de la déformation (132, 142) du dispositif de limitation de la déformation (130) extérieur et du dispositif de limitation de la déformation (128) intérieur dépassent des zones contiguës respectives de la plaque de limitation de la déformation (106), vers des côtés différents de la plaque de limitation de la déformation (106).

18. Joint de culasse selon l'une quelconque des revendications 14 à 17, **caractérisé en ce que** le dispositif de limitation de la déformation (128) intérieur comporte un élément de limitation de la déformation (132) qui présente une zone de renforcement (134) jouxtant l'ouverture de passage vers la chambre de combustion (114) de la plaque de limitation de la déformation (106), formée par le pliage de la zone de bord de l'ouverture de passage vers la chambre de combustion (114) hors du plan de la plaque de limitation de la déformation (106).

19. Joint de culasse selon l'une quelconque des revendications 1 à 18, **caractérisé en ce que** l'au moins une des zones de renforcement (146) est pliée vers l'ouverture de passage vers la chambre de combustion (114) de la plaque de limitation de la déformation (106) hors du plan de la plaque de limitation de la déformation (106).

20. Joint de culasse selon l'une quelconque des revendications 1 à 19, **caractérisé en ce que** l'au moins une des zones de renforcement (146) est pliée loin de l'ouverture de passage vers la chambre de combustion (114) de la plaque de limitation de la déformation (106) hors du plan de la plaque de limitation de la déformation (106).

21. Joint de culasse selon l'une quelconque des revendications 19 ou 20, **caractérisé en ce que** le dispositif de limitation de la déformation (130) comporte une pluralité d'éléments de limitation de la déformation (142) qui se suivent le long du sens périphérique de l'ouverture de passage vers la chambre de combustion (114), les zones de renforcement (146) des éléments de limitation de la déformation (142) étant pliées en alternance vers l'ouverture de passage vers la chambre de combustion (114) et loin de l'ouverture de passage vers la chambre de combustion (114) hors du plan de la plaque de limitation de la déformation (106).

22. Joint de culasse selon l'une quelconque des revendications 1 à 21, **caractérisé en ce que** l'au moins un élément de limitation de la déformation (142d, 142e, 142f) présente plusieurs zones de renforcement (146a, 146b, 146c, 146d) qui sont pliées vers différentes directions hors du plan de la plaque de limitation de la déformation (106).

23. Joint de culasse selon l'une quelconque des revendications 1 à 22, **caractérisé en ce que** la ligne de séparation (148) d'au moins une zone de renforcement (146) se poursuit dans une zone de la plaque de limitation de la déformation (106) non pliée hors du plan de la plaque de limitation de la déformation (106).

24. Joint de culasse selon l'une quelconque des revendications 1 à 23, **caractérisé en ce que** la ligne de séparation (148c) d'au moins une zone de renforcement (146) a été fermée de manière annulaire et la zone entourée par la ligne de séparation (148c) de la plaque de limitation de la déformation (106) a été séparée de la plaque de limitation de la déformation (106).

25. Joint de culasse selon l'une quelconque des revendications 1 à 24, **caractérisé en ce que** l'ouverture de passage (162), provenant du pliage de la zone de renforcement (146) de l'au moins un élément de limitation de la déformation (142) hors du plan de la plaque de limitation de la déformation (106), forme une partie d'une ouverture de passage (164) plus grande dans la plaque de limitation de la déformation (106).

26. Joint de culasse selon l'une quelconque des revendications 1 à 25, **caractérisé en ce que** le joint de culasse (100) comporte à côté de l'ouverture de passage vers la chambre de combustion (114, 114") ou des ouvertures de passage (114, 114") vers la chambre de combustion au moins une autre ouverture de passage (116', 116"), **en ce qu'**au moins une plaque d'étanchéité (102, 104) du joint de culasse (100) est pourvue d'une moulure (180) supplémentaire entourant l'autre ouverture de passage (116', 116") et **en ce que** le joint de culasse (100) comporte un dispositif de limitation de la déformation (182) supplémentaire pour la moulure (180) supplémentaire.

27. Joint de culasse selon la revendication 26, **caractérisé en ce que** le dispositif de limitation de la déformation (182) supplémentaire est disposé sur la plaque de limitation de la déformation (106).

28. Joint de culasse selon l'une quelconque des revendications 26 ou 27, **caractérisé en ce que** le dispositif de limitation de la déformation (182) supplémentaire comporte au moins un élément de limitation de la déformation (184, 132) qui présente au moins une zone de renforcement (184, 146) qui est formée par le pliage d'une zone de la plaque de limitation de la déformation (106) hors du plan de la plaque de limitation de la déformation (106).

29. Joint de culasse selon l'une quelconque des revendications 26 à 28, **caractérisé en ce que** l'ouverture de passage (116', 116'') supplémentaire est une ouverture de passage pour moyens de fixation.

30. Joint de culasse selon l'une quelconque des revendications 1 à 29, **caractérisé en ce qu'**au moins une plaque d'étanchéité (102, 104) du joint de culasse (100) est pourvue d'une moulure de bord (186) s'étendant le long du bord extérieur de la plaque d'étanchéité (102, 104) et **en ce que** le joint de culasse (100) comporte un dispositif de limitation de la déformation de bord (188) pour la moulure de bord (186).

31. Joint de culasse selon la revendication 30, **caractérisé en ce que** le dispositif de limitation de la déformation de bord (188) est disposé au niveau de la plaque de limitation de la déformation (106).

32. Joint de culasse selon l'une quelconque des revendications 30 ou 31, **caractérisé en ce que** le dispositif de limitation de la déformation de bord (188) comporte au moins un élément de limitation de la déformation (190) qui présente au moins une zone de renforcement (146) qui est formée par le pliage d'une zone de bord de la plaque de limitation de la déformation (106) hors du plan de la plaque de limitation de la déformation (106).
